# EUROPÄISCHE PATENTANMELDUNG

(11) **EP 1 564 165 A1**
(43) Veröffentlichungstag der Anmeldung: **17.08.2005**
(21) Anmeldenummer: 05002466.0
(22) Anmeldetag: 05.02.2005
(51) Int. Cl.: B65G 23/44

(54) **Zugmitteltrieb, insbesondere für eine Fördereinrichtung**

(30) Priorität: 11.02.2004 AT 2012004
(71) Anmelder: TGW TRANSPORTGERÄTE GmbH & Co. KG, 4600 Wels (AT)
(72) Erfinder: Angleitner, Karl, Dipl.-Ing. (FH(), 4921 Hohenzell (AT)
(74) Vertreter: Secklehner, Günter, Dr.

(57) **Zusammenfassung**

Die Erfindung betrifft einen Zugmitteltrieb (11) für eine Fördereinrichtung ( 1 ), mit einem Rahmen (10), jeweils wenigstens ein an diesem gelagertes Umlenkrad (15a, b) und Antriebsrad (17), einem in Bezug auf eine Umlaufrichtung reversierbaren und um das Umlenk- und Antriebsrad (15a, b, 17) geführten, endlos umlaufenden Zugmittel (13) mit einem gezogenen Trum und einem rücklaufenden Trum, einer Spanneinrichtung (18) sowie einem diese aufweisenden Stellelement. Die Spanneinrichtung (18) weist in Umlaufrichtung des Zugmittels (13) zwei hintereinander angeordnete und relativ zueinander verstellbare Tragkörper und an diesen jeweils gelagerte Spannelemente auf. Das Zugmittel (13) ist mit seinem gezogenen Trum um eines der Spannelemente und mit seinem rücklaufenden Trum um das andere der Spannelemente sowie um das Umlenk- und Antriebsrad (15a, b, 17) geführt, wobei die Spannelemente mit aufeinander zugerichteten Spannkräften beaufschlagt und in einem Abstand voneinander angeordnet sind, wobei der Abstand über das wenigstens eine Stellelement begrenzt verstellbar ausgebildet ist.

## Beschreibung

Die Erfindung betrifft einen Zugmitteltrieb und eine Fördereinrichtung, wie in den Oberbegriffen der Ansprüche 1 und 32 beschrieben.

Es ist bekannt, dass die mit einem endlos umlaufenden, flexiblen Zugmittel, beispielsweise einem Gurt, Band, Kette und dgl., ausgerüsteten Zugmitteltriebe eine Spanneinrichtung aufweisen müssen, welche die erforderliche Spannung im endlosen Zugmittel unter allen Betriebsbedingungen gewährleistet und damit die zur Übertragung der Umfangskraft des Antriebsrades erforderliche Vorspannung liefert sowie den Reibeingriff zwischen dem Zugmittel und dem Antriebsrad aufrecht hält. Somit wirkt sich eine Längung bzw. Dehnung des endlosen Zugmittels nur unwesentlich auf die vom Antriebsrad auf das Zugmittel übertragbare Umfangskraft aus.

Aus der DE 43 91 686 T1 ist eine Spanneinrichtung für ein um ein Paar von Umlenkrädern, Antriebsrädern und Spannrädern geführtes Zugmittel, insbesondere ein Förderband, eines Zugmitteltriebes einer Fördereinrichtung bekannt, bei der das Paar von Spannrädern auf einem mittels einem mit Druckmittel beaufschlagten Stellzylinder gegenüber dem Rahmen der Fördereinrichtung verstellbaren Führungsschlitten (Platte) frei drehbar gelagert und in Spannrichtung der Spannräder in einem festen Abstand voneinander angeordnet sind. Der Führungsschlitten ist entlang einer Kulissenbahn im Rahmen verstellbar gehalten und wird das Zugmittel mit der Verstellung des Führungsschlittens in Richtung zum Stellzylinder über die gleichermaßen synchron zueinander verstellten Spannräder mit in gleicher Richtung weisenden Spannkräften beaufschlagt und somit gespannt. Das endlose Zugmittel ist von einem der Umlenkräder über das am Führungsschlitten gelagerte, erste Spannrad und danach über das erste Antriebsrad zu dem in Umlaufrichtung nachgeschalteten, oberhalb des ersten Antriebsrades am Führungsschlitten gelagerte zweite Spannrad und letztendlich über das zweite Antriebsrad geführt, wonach im Normalbetrieb der Fördereinrichtung (Förderung von Stückgütern von links nach rechts) in Bezug auf die Antriebsräder eines der Spannräder am gezogenen Trum des Zugmittels anliegt und im Reversierbetrieb (Förderung von Stückgütern von rechts nach links) beide Spannräder an jeweils einem in Bezug auf die Antriebsräder gezogenen Trum des Zugmittels anliegen. Dadurch muss die auf die Spannräder wirkende Spannkraft unnötigerweise hoch dimensioniert und ein entsprechend leistungsfähiger Stellzylinder verwendet werden.

Eine Fördereinrichtung, insbesondere ein Bandförderer, mit einer Spanneinrichtung ist auch aus der EP 1 260 460 A1 bekannt, die ein um zwei an einem Rahmen frei drehbar gelagerte Umlenkräder und ein Antriebsrad geführtes, endlos umlaufendes, flexibles Zugmittel sowie eine am Zugmittel anliegende Spanneinrichtung aufweist. Diese Spanneinrichtung weist in Umlaufrichtung des Zugmittels über einen Führungsschlitten in einem festen Abstand voneinander angeordnete und an diesem drehbar gelagerte Spannräder auf. Der Führungsschlitten ist in Form einer Stange oder eines Seiles ausgebildet. Zum Ausgleich einer Längenänderung des endlosen Zugmittels, werden die beiden starr miteinander gekoppelten Spannräder gegenüber dem stationären Antriebsrad in vertikaler und/oder horizontaler Richtung verstellt.

Ferner ist aus der WO 88/07489 A1 ein Zugmitteltrieb einer Fördereinrichtung bekannt, der ein endlos umlaufendes Zugmittel, insbesondere eine Kette, mit einem rücklaufenden Trum und einem gezogenen Trum und eine wenigstens ein in Richtung zum Zugmittel hin gerichteter Spannkraft beaufschlagtes Spannelement aufweisende Spanneinrichtung umfasst. Das Zugmittel ist um ein an einem Rahmen des Zugmitteltriebes drehbar gelagertes Umlenkrad, eine am Rahmen befestigte Laufschiene und einen bogenförmigen Umlenkteil sowie ein Antriebsrad geführt. Die Spanneinrichtung ist im rücklaufenden Trum des Zugmittels zwischen dem Antriebsrad und dem zum Umlenkteil gegenüberliegenden Umlenkrad angeordnet und weist eine einseitig wirkende Sperrvorrichtung auf, die eine gegen die Spannkraft gerichtete Verschiebebewegung des Spannelementes blockiert. Der bekannte Zugmitteltrieb ist für den Reversierbetrieb nur beschränkt einsetzbar, da nach Umkehr der Umlaufrichtung des Zugmittels vom Normalbetrieb in den Reversierbetrieb, das Spannelement gegen das gezogene Trum des Zugmittels anliegt und nur durch die Anordnung der zusätzlichen, einseitig wirkenden Sperrvorrichtung sichergestellt werden kann, dass die Spannung im Zugmittel aufrechterhalten bleibt.

Ferner ist aus der GB 619 075 A ein Zugmitteltrieb für eine Fördereinrichtung bekannt, der einen Rahmen, zwei an diesem gelagerte Umlenk- und Antriebsräder, zwei Spannräder sowie ein um diese geführtes, endlos umlaufendes Zugmittel umfasst. Die Spannräder sind angetrieben und auf relativ zueinander verstellbaren Tragkörpern gelagert. Den Tragkörpern ist jeweils eine Justiervorrichtung zugeordnet, über die von Zeit zu Zeit manuell die Tragkörper nachgestellt werden, wodurch das Zugmittel mit aufeinander zugerichteten Spannkräften beaufschlagt und gespannt wird. Ein selbsttätiges Nachstellen der Spannräder zur Aufrechterhaltung der Spannkräfte ist in der GB 619 075 A nicht vorgesehen.

Die DE 11 64 926 B offenbart einen Zugmitteltrieb für eine Fördereinrichtung, bei dem ein Zugmittel über zwei Antriebsräder und drei Umlenkräder geführt ist. Zwei der Umlenkräder sind auf relativ zueinander verstellbaren Tragkörpern gelagert, während das dritte Umlenkrad ortsfest angeordnet ist. Die Tragkörper sind als Spannwagen ausgebildet, die hintereinander auf einer gemeinsamen Bahn verfahrbar sind und getrennt voneinander über jeweils ein Seil gezogen werden. Die Seile sind auf von Spannmotoren angetriebenen Trommeln aufgewickelt.

Schließlich ist aus der DE 29 23 891 A eine Fördereinrichtung mit einem Zugmitteltrieb bekannt, der ein Zugmittel, einen horizontal verfahrbaren Spannwagen mit an seinen Enden angeordneten Umlenkrädern, zwei Antriebsräder und ein ortsfest angeordnetes, drittes Umlenkrad umfasst, wobei das Zugmittel in Bezug auf seine Umlaufrichtung von den Antriebsräder zum ersten Umlenkrad am Spannwagen über das dritte Umlenkrad zurück zum zweiten Umlenkrad am Spannwagen geführt wird.

Der vorliegenden Erfindung liegt die Aufgabe zugrunde, einen verbesserten Zugmitteltrieb für eine Fördereinrichtung zu schaffen, der sich durch seinen Aufbau auszeichnet und im Reversierbetrieb mit den gleichen Fördereigenschaften betrieben werden kann, wie im Normalbetrieb.

Die Aufgabe der Erfindung wird durch die im Kennzeichenteil des Anspruches 1 wiedergegebenen Merkmale gelöst. Die überraschenden Vorteile sind, dass sowohl im Normalbetrieb (Rechtslauf des Zugmittels) als auch im Reversierbetrieb (Linkslauf des Zugmittels) ein Spannelement am gezogenen Trum anliegt, während das andere Spannelement am rücklaufenden Trum anliegt und unabhängig von der Betriebsart bzw. Umlaufrichtung des Zugmittels, das am rücklaufenden Trum des Zugmittels anliegende Spannelement die Spannung im Zugmittel selbsttätig aufrecht hält. Wird als Zugmittel ein Flachriemen, Keilriemen, Gurt, Band, Seil und dgl. eingesetzt, kann nun in einfacher Weise die Umfangskraft vom Antriebsrad auf das Zugmittel schlupffrei übertragen wird. Ist das Zugmittel als Kette, Zahnriemen und dgl. ausgebildet, wird die Spannung im Zugmittel selbsttätig aufrecht gehalten und werden verschleißbringende Kettenschwingungen vermieden. Dazu kommt, dass während dem Betrieb des Zugmitteltriebes die durch die Betriebslast entstehende Längung des Zugmittels als auch eine alterungsbedingte Längung des Zugmittels, über das am rücklaufenden Trum anliegende Spannelement fortlaufend ausgeglichen wird und die Spannung im Zugmittel ohne Notwendigkeit der zeitweisen Nachspannung selbsttätig aufrecht erhalten bleibt. Dadurch kann das manuelle Nachspannen des Zugmittels in periodischen Zeitabständen bei Wartungsarbeiten vermieden werden. Die Spannung im Zugmittel wird in vorteilhafter Weise über wenigstens ein zwischen den am Rahmen schwimmend gelagerten Tragkörpern angeordnetes Stellelement erzeugt.

Vorteilhaft ist auch die Ausgestaltung nach Anspruch 2, wodurch einer der Tragkörper und das an diesem gelagerte Spannelement unter Wirkung der Trumkraft im gezogenen Trum des Zugmittels positioniert gegen das Anschlagelement gehalten ist, während das am rücklaufenden Trum anliegende, gegenüberliegende Spannelement mit der in Richtung auf das positioniert gehaltene Spannelement gerichteten und die Trumkraft im rücklaufenden Trum übersteigenden Spannkraft beaufschlagt wird und das Zugmittel strafft.

Gemäß Anspruch 3 wird eine Kollision zwischen den Spannelementen verhindert.

Eine vorteilhafte Ausführung ist in Anspruch 4 beschrieben, bei der eine zuverlässige Führung der Tragkörper entlang einer Kulissenbahn am Rahmen sichergestellt ist.

Vorteilhaft ist aber auch die Weiterbildung nach Anspruch 5, durch die eine kleinbauende Konstruktion der Spanneinrichtung geschaffen ist.

Unterschiedliche Ausbildungen und Anordnungen der Spannelemente sind in den Ansprüchen 6 bis 8 beschrieben.

Gemäß Anspruch 9 wird der maximale Verstellweg der Tragkörper über die Anschlagelemente begrenzt und damit eine unnötige Verstellbewegung der Führungsschlitten bei Änderung der Umlaufrichtung bzw. Wechsel des Normalbetriebes in den Reversierbetrieb vermieden.

Von Vorteil sind auch die Weiterbildungen nach den Ansprüchen 10 bis 19, da nach dem Überschreiten der durch das Gewicht der zu transportierenden Stückgüter entlang des Zugmitteltriebes betriebsmäßig, hervorgerufenen Dehnung/Längung des Zugmittels, das Anschlagelement gleichsinnig mit dem Koppelungselement in Richtung auf den zur Nachstellvorrichtung benachbarten Tragkörper nachgestellt wird und damit ein durch die Anschlagelemente begrenzter Verstellweg für die entlang der Kulissenbahn verstellbaren Tragkörper verkürzt wird. Mit der Verkürzung des Verstellweges wird auch der Verstellabstand zwischen der Anschlagfläche des betreffenden Tragkörpers und dem Anschlagelement verringert, sodass die kinetische Energie der Tragkörper während deren Verstellung in Richtung auf das Anschlagelement nur in begrenztem Maße ansteigen kann. Auf diese Weise ist eine schonende Behandlung der Spanneinrichtung, des Zugmittels und des Rahmens möglich. Dazu kommt, dass nun selbst bei sehr langen Fördereinrichtungen und der hierfür verwendeten Zugmittel in Abhängigkeit deren zugelassenen, maximalen Dehnung, wenigstens eines der Anschlagelemente verstellt werden kann und deshalb auch häufige Umschaltvorgänge der Fördereinrichtung vom Normalbetrieb in den Reversierbetrieb keine nachteiligen Auswirkungen auf die Fördereigenschaften, insbesondere Umfangskraft, Fördergeschwindigkeit, und die Standzeit der Fördereinrichtung mit sich bringen.

Vorteilhafte Ausgestaltungen des Stellelementes sind im Anspruch 20 beschrieben.

Die Fortbildung nach Anspruch 21 ist von Vorteil, da zumindest ein Großteil der Aufprallenergie während des Anschlagens des Tragkörpers am Anschlagelement absorbiert werden kann.

In der Ausführung nach Anspruch 22 ist eine vorteilhafte Anordnung der Dämpfungselemente beschrieben.

Vorteilhaft ist auch die Fortbildung nach Anspruch 23, wodurch die Verstellgeschwindigkeit der Tragkörper nach dem Umschalten vom Normalbetrieb in den Reversierbetrieb der Fördereinrichtung gezielt gebremst und die durch den Aufprall des Tragkörpers mit seiner Anschlagfläche am Anschlagelement hervorgerufene Aufprallenergie maßgeblich verringert wird.

Gemäß Anspruch 24 bildet das Stellelement gleichzeitig ein Dämpfungselement aus, das die beim Aufprall des Tragkörpers mit seiner Anschlagfläche gegen das gegenüber diesem stationäre Anschlagelement hervorgerufene Aufprallenergie teilweise vom Stellelement absorbiert wird und das am rücklaufenden Trum anliegende Spannelement im wesentlichen unbelastet bleibt.

Aber auch die Ausbildungen nach den Ansprüchen 25, 26 und 28 sind von Vorteil, da auf einfache Weise ein besonders wirkungsvolles Antriebskonzept geschaffen ist und die Spanneinrichtung als auch das weitere Umlenkrad und Antriebsrad unterhalb der Transportebene, in dem ohnehin zwischen der Aufstandsfläche der Fördereinrichtung und dem Zugmitteltrieb vorhandenen Raum untergebracht sind.

Gemäß der Ausgestaltung nach Ansprüchen 27, wird eine auf das Zugmittel übertragbare, hohe Umfangskraft bzw. Antriebsleistung erreicht, wodurch auch Stückgüter mit besonders hohem Gewicht transportiert werden können.

Die Ausgestaltung nach Anspruch 29 erleichtert Reparatur- oder Montagearbeiten am Zugmitteltrieb.

Durch die Maßnahme nach Anspruch 30 kann die vom Antriebsrad und/oder angetriebenen Spann- und/oder weiteren Umlenkrad auf das Zugmittel übertragbare Umfangskraft bzw. Antriebsleistung erhöht werden.

Unterschiedliche Ausbildungen des Zugmittels sind im Anspruch 31 beschrieben.

Schließlich wird die Aufgabe der Erfindung aber auch durch die Merkmale im Anspruch 32 gelöst. Von Vorteil ist, dass der Transport von Stückgütern an der Fördereinrichtung wahlweise von links nach rechts oder rechts nach links mit gleichbleibenden Fördereigenschaften, insbesondere Umfangskraft, Fördergeschwindigkeit und dgl., möglich ist und durch den kompakten Aufbau der Spanneinrichtung ein störungsfreier Betrieb der Fördereinrichtung ohne Notwendigkeit der zeitweisen, manuellen Nachspannung erreicht wird.

Die Erfindung wird im Nachfolgenden anhand der in den Zeichnungen dargestellten Ausführungsbeispiele näher erläutert.

### Es zeigen:

- Fig. 1: die erfindungsgemäße Fördereinrichtung und der erfindungsgemäße Zugmitteltrieb in Seitenansicht und vereinfachter Darstellung;
- Fig. 2: die Fördereinrichtung nach Fig. 1, in Draufsicht und vereinfachter Darstellung;
- Fig. 3: eine erste Ausführungsvariante des erfindungsgemäßen Zugmitteltriebes mit dem in eine erste Umlaufrichtung angetriebenen, endlosen Zugmittel, in perspektivscher Ansicht und vereinfachter Darstellung;
- Fig. 4: der Zugmitteltrieb nach Fig. 3 mit dem in eine zweite Umlaufrichtung angetriebenen, endlosen Zugmittel, in perspektivischer Ansicht und vereinfachter Darstellung;
- Fig. 5: eine weitere Ausführungsvariante des erfindungsgemäßen Zugmitteltriebes, in perspektivischer Ansicht und vereinfachter Darstellung;
- Fig. 6: der Zugmitteltrieb nach Fig. 3 mit einer dieser aufweisenden Nachstelleinrichtung zum Nachstellen eines ersten Anschlagelementes in Richtung des diesem gegenüberliegenden, zweiten Anschlagelementes, in perspektivischer Ansicht und vereinfachter Darstellung;
- Fig. 7: eine Ausschnittsvergrößerung aus Fig. 6 mit der Nachstellvorrichtung, in Seitenansicht, teilweise geschnitten;
- Fig. 8: eine andere Ausführung der Nachstellvorrichtung für das Anschlagelement in deren Ausgangsstellung, in Seitenansicht und vereinfachter Darstellung;
- Fig. 9: die Nachstellvorrichtung nach Fig. 8 in ihrer ersten Betätigungsstellung, in Seitenansicht und vereinfachter Darstellung;
- Fig. 10: die Nachstellvorrichtung nach Fig. 8 in ihrer zweiten Betätigungsstellung, in Seitenansicht und vereinfachter Darstellung;
- Fig. 11: ein Teilbereich einer anderen Ausführungsvariante des erfindungsgemäßen Zugmitteltriebes mit einer weiteren Ausbildung einer Spanneinrichtung, in perspektivischer Ansicht und vereinfachter Darstellung;
- Fig. 12: der Zugmitteltrieb nach Fig. 4 mit einer weiteren Ausgestaltung der Spanneinrichtung mit zwei Verstellgeschwindigkeitsbegrenzer, in Seitenansicht und vereinfachter Darstellung;
- Fig. 13: eine letzte Ausführungsvariante des erfindungsgemäßen Zugmitteltriebes mit einer weiteren Ausgestaltung der Spanneinrichtung, in Seitenansicht und vereinfachter Darstellung;
- Fig. 14: die Spanneinrichtung nach Fig. 13, in Draufsicht und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

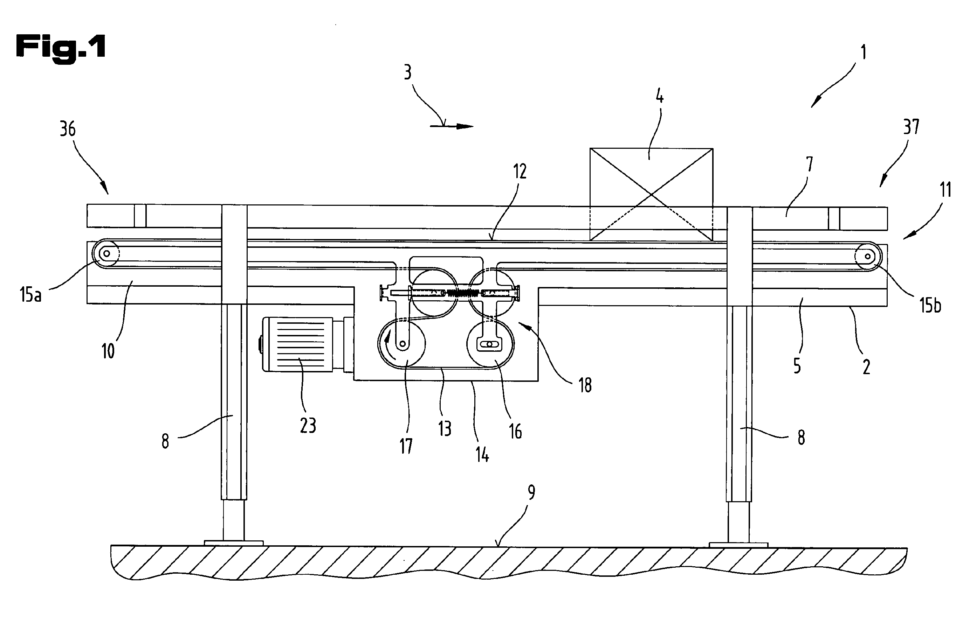

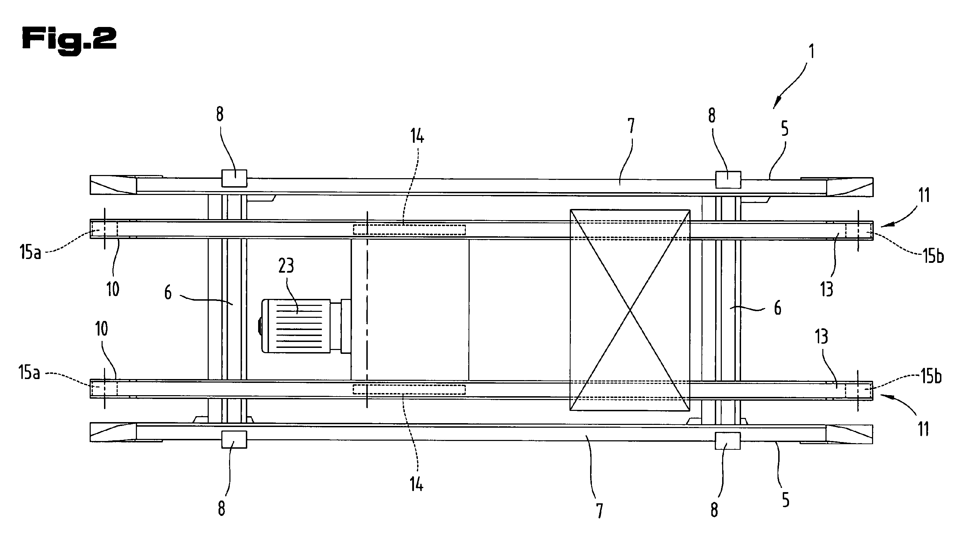

In den gemeinsam beschriebenen Fig. 1 und 2 ist eine mögliche Ausführungsvariante einer Fördereinrichtung 1, insbesondere eines Zweispurförderers, in unterschiedlichen Ansichten und vereinfacht gezeigt. Die Fördereinrichtung 1 umfasst ein Traggestell 2 mit in Förderrichtung - gemäß Pfeil 3 - von Stückgütern 4 verlaufenden und die Fördereinrichtung 1 seitlich begrenzenden Seitenteilen 5, die über mehrere in Förderrichtung - gemäß Pfeil 3 - gesehen, voneinander beabstandet angeordnete Querträger 6 verbunden sind und somit auf Abstand gehalten werden. An den gegenüberliegenden Seitenteilen 5 ist jeweils eine in Förderrichtung - gemäß Pfeil 3 - verlaufende und mit diesen befestigte Seitenführungsschiene 7 vorgesehen, über welche die Stückgüter 4 entlang eines zwischen diesen ausgebildeten Transportweges seitlich geführt sind. Die Fördereinrichtung 1 ist über mit den Querträgern 6 verbundene Stützfüße 8 auf einer horizontalen Aufstandsfläche 9, beispielsweise einem Boden einer Werkshalle abgestützt.

Wie in Fig. 2 ersichtlich, weist die Fördereinrichtung 1 zwei in Förderrichtung - gemäß Pfeil 3 - parallel verlaufende und jeweils über einen Rahmen 10 auf dem Traggestell 2 gelagerte Zugmitteltriebe 11 auf. Die Fördereinrichtung 1 weist eine parallel zur Aufstandfläche 9 verlaufende, horizontale Transportebene 12 auf, die von den Oberflächen der gezogenen Trume zweier parallel nebeneinander und voneinander beabstandet verlaufender Zugmittel 13 gebildet ist. Die Zugmitteltriebe 11 weisen je eine Antriebsstation 14 auf, wobei im Nachfolgenden beschriebene Antriebsräder 17 über eine in strichpunktierte Linien, eingetragene gemeinsame Antriebswelle drehstarr verbunden und an einen Antrieb 23 gekuppelt sind. Unterschiedliche Ausführungen der Zugmitteltriebe 11 sind in den nachfolgenden Fig. näher beschrieben.

Die Zugmittel 13 sind endlos ausgebildet und jeweils um benachbart zur Transportebene 12 angeordnete Umlenkrollen 15a, b geführt, die an den stirnseitigen Enden der Fördereinrichtung 1 angeordnet sind. Beispielsweise sind die endlosen Zugmittel 13 in Form eines Riemens, Gurtes ausgebildet. Im Sinne der Erfindung ist es auch möglich, als endloses Zugmittel 13 bzw. Fördermittel, wie Zahnriemen, Flachriemen, Ketten, Seile, Bänder und dgl. zu verwenden. Dem gemäß kann die Fördereinrichtung 1 auch einen Band- oder Gurtförderer und dgl. ausbilden.

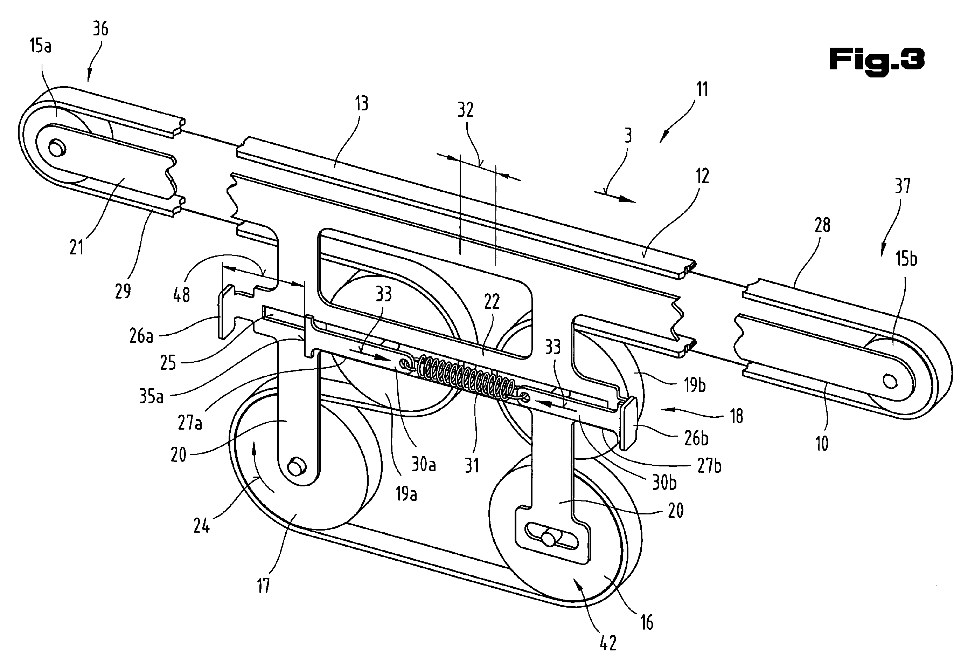

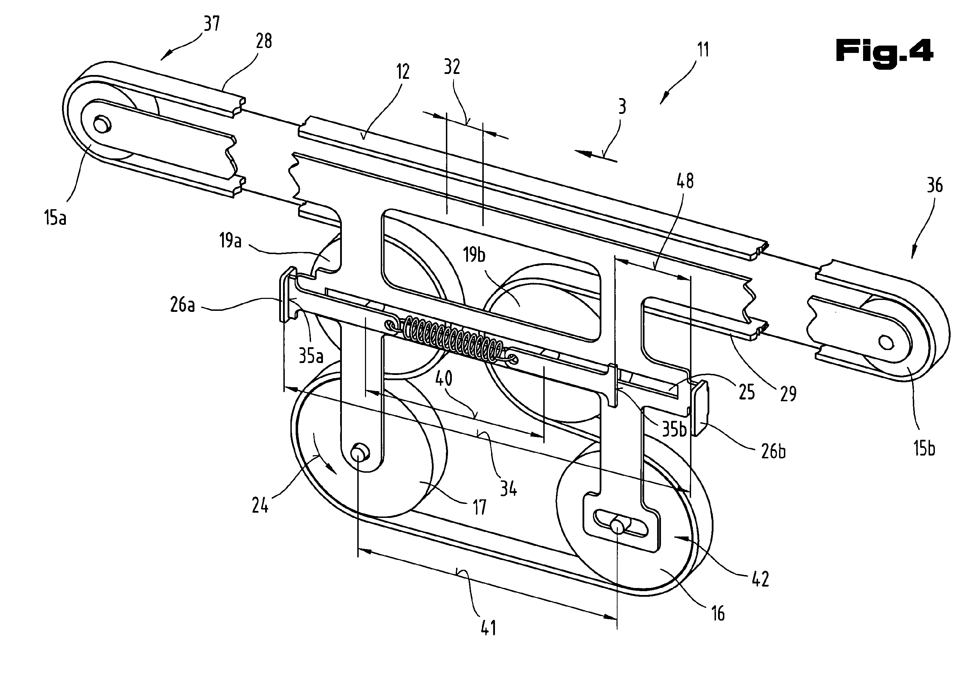

In den gemeinsam beschriebenen Fig. 3 und 4 ist eine erste Ausführungsvariante des erfindungsgemäßen Zugmitteltriebes 11 in perspektivischer Ansicht und stark vereinfacht gezeigt. Der Zugmitteltrieb 11 weist den auf dem Traggestell 2 der Fördereinrichtung 1 befestigten Rahmen 10, wenigstens ein Zugmittel 13, das Paar von in Förderrichtung - gemäß Pfeil 3 - im Abstand voneinander angeordneten und benachbart zur Transportebene 12 liegenden Umlenkrädern 15a, b, ein weiteres Umlenkrad 16, ein Antriebsrad 17 sowie eine noch näher zu beschreibende Spanneinrichtung 18 mit zwei Spannelementen 19a, b auf. Das Zugmittel 13, insbesondere ein Gurt, Band und dgl., ist um die beiden Umlenkräder 15a, b und die beiden Spannelemente 19a, b sowie die Umlenk- und Antriebsräder 16, 17 geführt. Das weitere Umlenk- und Antriebsrad 16, 17 sowie die Spanneinrichtung 18 sind zu der Antriebsstation 14 zusammengefasst, wie in Fig. 1 eingetragen.

Der Rahmen 10 ist in einer bevorzugten Ausführung durch eine Blechbiegekonstruktion gebildet und weist zwischen den beiden Umlenkrädern 15a, b zwei in Längserstreckung des Zugmitteltriebes 11 im Abstand voneinander angeordnete, etwa senkrecht zur Transportebene 12 ausgerichtete Tragschenkel 20 und einen die Tragschenkel 20 miteinander verbindenden und seitlich an diesen in entgegengesetzten Richtungen annähernd über die gesamte Länge des Zugmitteltriebes 11 erstreckenden Tragarm 21 sowie einen sich zwischen den Tragschenkeln 20 im Wesentlichen parallel zur Transportebene 12 erstreckenden Verbindungssteg 22 auf. An den gegenüberliegenden freien Enden des Tragarmes 21 sind die Umlenkräder 15a, b frei drehbar gelagert. Ebenso sind das weitere Umlenk- und Antriebsrad 16, 17 jeweils am freien Ende der Tragschenkel 20 drehbar gelagert. Das wenigstens eine Antriebsrad 17 ist an einen in Fig. 1 und 2 eingetragenen Antrieb 23, insbesondere Elektromotor, wie Synchron- oder Asynchronmotor und dgl., mit reversierbarer Antriebsrichtung gekuppelt. Somit kann die Umlaufrichtung - gemäß eingetragenem Pfeil 24 - des Zugmittels 13 wahlweise in Abhängigkeit der gewünschten Förderrichtung - gemäß Pfeil 3 - der Stückgüter 4 (siehe Fig. 1) von einem Rechtslauf, wie in Fig. 3 dargestellt, in einen Linkslauf, wie in Fig. 4 dargestellt, geändert werden. Die Umfangskraft wird nach dieser Ausführung des Zugmittels 13 als Riemen, insbesondere Flachriemen, ausschließlich über Reibschluss vom Antriebsrad 17 auf das Zugmittel 13 übertragen und kann in Abhängigkeit des Umschlingungswinkels des Zugmittels 13 um das Antriebsrad 17 und vom Reibwert zwischen dem Antriebsrad 17 und dem Zugmittel 13, die auf das Zugmittel 13 übertragbare Umfangskraft bzw. Antriebsleistung je nach Anwendungsfall, wie unterschiedliches Gewicht der zu transportierenden Stückgüter 4, abgestimmt werden.

Am Rahmen 10, insbesondere am Verbindungssteg 22, sind eine parallel zur Transportebene 12 in Richtung der Längserstreckung des Zugmitteltriebes 11 verlaufende Kulissenbahn 25 in Form einer Längsführung, beispielsweise eines Längsschlitzes, und zwei Anschlagelemente 26a, b vorgesehen, die in Verlängerung des Verbindungssteges 22 an den aufragenden Tragschenkeln 20 senkrecht abstehen und in den Verstellweg von noch näher zu beschreibenden Tragkörpern 27a, b der Spanneinrichtung 18 vorragen. Diese Anschlagelemente 26a, b sind mit dem Rahmen 10 verbunden, insbesondere einstückig mit diesem ausgebildet.

Wie in den Fig. ersichtlich, sind beide Spannelemente 19a, b in einer unterhalb eines gezogenen Trums 28 (Lasttrum) des Zugmittels 13 und im Wesentlichen parallel zur Transportebene 12 verlaufenden Ebene zwischen den Umlenkrädern 15a, b angeordnet und über die Tragkörper 27a, b entlang der Kulissenbahn 25 begrenzt verstellbar am Rahmen 10 gelagert. Das Antriebsrad 17 und das erste Spannelement 19a sowie weitere Umlenkrad 16 und das zweite Spannelement 19a sind jeweils paarweise übereinander angeordnet und beträgt ein Umschlingungswinkel des Zugmittels 13 an den Antriebs- und Umlenkräder 16, 17 sowie den Spannelementen 19a, 19b jeweils etwa 180°.

Das gezogene Trum 28 bildet mit seiner, von den Umlenkrädern 15a, b abgewandten, äußeren Oberfläche die Transportebene 12 aus und dient der Förderung von Stückgütern 4 entlang des Transportweges der Fördereinrichtung 1, wie sie in Fig. 1 und 2 dargestellt ist. Das Zugmittel 13 ist mit seinem gezogenen Trum 28 an einem parallel zur Transportebene 12 und unterhalb des gezogenen Trums 28 verlaufenden Führungsprofil (wie nicht weiters dargestellt) geführt und gleitend abgestützt. Dieses Führungsprofil erstreckt sich zwischen den Umlenkrädern 15a, b annähernd über die gesamte Länge der Fördereinrichtung 1 und ist am Rahmen 10 befestigt.

Nach Fig. 3, ist das Zugmittel 13 in seiner Umlaufrichtung - gemäß Pfeil 24 - vom Antriebsrad 17 über das erste Spannelement 19a und die beiden Umlenkrollen 15a, b und danach über das zweite Spannelement 19b und das weitere Umlenkrad 16 zurück zum Antriebsrad 17 geführt ist, wobei demnach das gezogene Trum 28 des Zugmittels 13 von den Umlenkrollen 15a, b über das zweite Spannelement 19b und das weitere Umlenkrad 16 bis zum Antriebsrad 17 läuft, während ein rücklaufendes Trum 29 (Leertrum) des Zugmittels 13 vom Antriebsrad 17 über das erste Spannelement 19a bis zur in Umlaufrichtung - gemäß Pfeil 24 - ersten Umlenkrolle 15a läuft.

Nach Fig. 4, ist das Zugmittel 13 in Umlaufrichtung - gemäß Pfeil 24 - vom Antriebsrad 17 über das weitere Umlenkrad 16 und zweite Spannelement 19b und dann über die beiden Umlenkrollen 15a, b und danach über das erste Spannelement 19a und zurück zum Antriebsrad 17 geführt, wobei demnach das gezogene Trum 28 des Zugmittels 13 von den Umlenkrollen 15a, b über das erste Spannelement 19a bis zum Antriebsrad 17 läuft, während das rücklaufende Trum 29 des Zugmittels 13 vom Antriebsrad 17 über das weitere Umlenkrad 16 und das zweite Spannelement 19b bis zur in Umlaufrichtung - gemäß Pfeil 24 - zweiten Umlenkrolle 15b läuft.

Wie bereits oben kurz beschrieben, weist die Spanneinrichtung 18 zumindest zwei Spannelemente 19a, b, insbesondere Spannräder, auf, welche an den voneinander getrennt ausgebildeten und in Umlaufrichtung - gemäß Pfeil 24 - des Zugmittels 13 einander gegenüberliegend angeordneten sowie gegenüber dem Rahmen 10 und relativ zueinander verstellbaren Tragkörpern 27a, b gelagert sind. Die Trägkörper 27a, b sind als Führungsschlitten 30a, b ausgebildet und jeweils über eine nicht näher dargestellte Führungsvorrichtung entlang der parallel zur Transportebene 12 des Zugmitteltriebes 11 verlaufenden, schlitzartigen Kulissenbahn 25 geführt verstellbar sowie über wenigstens ein längenveränderbares Stellelement 31 bewegungsmäßig miteinander gekoppelt. Das Stellelement 31 ist nach dieser Ausführung durch ein längenveränderbares Federelement, insbesondere eine Zugfeder, gebildet, das mit seinen Enden an den in Richtung der Längserstreckung der Kulissenbahn 25 einander gegenüberliegenden Führungsschlitten 30a, b angelenkt ist. Somit sind die beiden Führungsschlitten 30a, b und die an diesen gelagerten Spannelemente 19a, b über das Stellelement 31 bewegungsmäßig miteinander gekoppelt, sodass unvermeidliche, während des Betriebes des Zugmitteltriebes 11 durch von der mechanischen Belastung abhängige Dehnung, Verschleiß, Alterung, klimatische und sonstige Bedingungen auftretende Längenänderung des Zugmittels 13 ausgeglichen werden können und die zur Beförderung von Stückgütern 4 mit dem Zugmitteltrieb 11 vom Antriebsrad 17 auf das Zugmittel 13 übertragene Umfangskraft im Wesentlichen schlupffrei übertragen wird.

Da bei den meisten Anwendungsfällen die Längenänderung des Zugmittels 13 sich in Form einer Verlängerung auswirkt, kann nun über das Stellelement 31 ein Abstand 32 zwischen den relativ zueinander verstellbaren Führungsschlitten 30a, b und damit der Spannelemente 19a, b verkürzt werden, da gleichermaßen mit der Verlängerung des Zugmittels 13 die Spannelemente 19a, b aufeinander zubewegt und jedes der Spannelemente 19a, b eine zum Zugmittel 13 hin gerichtete Spannkraft in Spannrichtung - gemäß den Pfeilen 33 - aufbringt. Die in einer Wirkungslinie aufeinander zugerichteten und in einer parallel zur Transportebene 12 verlaufenden Ebene wirkenden Spannkräfte resultieren aus der Federkraft des Stellelementes 31 und werden entsprechend dem Gewicht der zu transportierenden Stückgüter 4 ausgelegt. Es sei an dieser Stelle hingewiesen, dass die Trumkraft im gezogenen Trum 28 höher ist als im rücklaufenden Trum 29 und höher ist als die auf das am gezogenen Trum 28 anliegende Spannelement 19a, b wirkende und dieser entgegengerichtete Spannkraft. Die Trumkraft im rücklaufenden Trum 29 ist niedriger als die auf das am rücklaufenden Trum 29 anliegende Spannelement 19a, b wirkende und dieser entgegengerichtete Spannkraft.

Ein in Fig. 4 eingetragener Verstellweg 34 für die entlang der Kulissenbahn 25 verstellbar geführten Führungsschlitten 30a, b, ist durch die in Längserstreckung der Kulissenbahn 25 voneinander beabstandeten Anschlagelemente 26a, b begrenzt. Die Führungsschlitten 30a, b bilden auf ihren voneinander abgewandten Seiten jeweils eine Anschlagfläche 35a, b aus und ist nach Fig. 3 der mit dem am gezogenen Trum 28 anliegenden Spannelement 19b versehene Führungsschlitten 30b und nach Fig. 4 der mit dem am gezogenen Trum 28 anliegenden Spannelement 19a versehene Führungsschlitten 30a zumindest während der Vorschubbewegung des Zugmittels 13 in Umlaufrichtung - gemäß Pfeil 24 - mit seiner Anschlagfläche 35b, 35a gegen das diesem zugeordnete Anschlagelement 26b, 26a abgestützt und unter der Wirkung der Trumkraft im gezogenen Trum 28 positioniert gehalten. Demnach ist in jedem Betriebszustand des Zugmitteltriebes 11 eines der Spannelemente 19a, b, daher nach Fig. 3 das Spannelement 19a und nach Fig. 4 das Spannelement 19b im entlasteten, rücklaufenden Trum 29 anliegend, sodass unabhängig von der Umlaufrichtung - gemäß Pfeil 24 - das Zugmittel 13 auch bei niedrigen Spannkräften ausreichend gespannt wird. Dazu kommt, dass das Spannen des Zugmittels 13 über das Stelleelement 31 selbsttätig erfolgt.

Soll das in Fig. 1 eingetragene Stückgut 4 von einer Einlaufseite 36 in Richtung einer dieser gegenüberliegenden Auslaufseite 37 entlang des Transportweges der Fördereinrichtung 1 in Förderrichtung - gemäß Pfeil 3 - über die Zugmitteltriebe 11 transportiert werden, wird das Antriebsrad 17 mit der mit dem Pfeil angedeuteten Drehrichtung beaufschlagt und das Zugmittel 13 in die mit dem Pfeil 24 in Fig. 3 eingetragene Umlaufrichtung versetzt, wobei dann das in Umlaufrichtung - gemäß Pfeil 24 - betrachtet, um das zweite Spannelement 19b geführte, gezogene Trum 28, die Führungsschlitten 30a, b entlang der Kulissenbahn 25 in Richtung zum Anschlagelement 26b verschiebt, bis der Führungsschlitten 30b mit seiner Anschlagfläche 35b gegen das Anschlagelement 26b anliegt. Infolge der Vorschubbewegung des Zugmittels 13 in Umlaufrichtung - gemäß Pfeil 24 - und der Wirkung der Trumkraft im gezogenen Trum 28 wird der Führungsschlitten 30b gegen das Anschlagelement 26b positioniert gehalten, während der Führungsschlitten 30a bei einer Dehnung des Zugmittels 13 über das Stellelement 31 auf den positioniert gehaltenen Führungsschlitten 30b zubewegt, das Zugmittel 13 im rücklaufende Trum 29 gespannt bzw. gestrafft und die Umfangskraft vom Antriebsrad 17 auf das Zugmittel 13 schlupffrei übertragen wird.

Soll jedoch das Stückgut 4 in entgegengesetzter Förderrichtung - gemäß Pfeil 3 -entlang des Transportweges der Fördereinrichtung 1 transportiert werden, wird das Antriebsrad 17 mit der mit dem Pfeil angedeuteten Drehrichtung beaufschlagt und das Zugmittel 13 in die mit dem Pfeil 24 in Fig. 4 eingetragene Umlaufrichtung versetzt, wobei dann das in Umlaufrichtung - gemäß Pfeil 24 - betrachtet, um das erste Spannelement 19a geführte, gezogene Trum 28, die Führungsschlitten 30a, b entlang der Kulissenbahn 25 in Richtung zum Anschlagelement 26a verschiebt, bis der Führungsschlitten 30a mit seiner Anschlagfläche 35a gegen das Anschlagelement 26a anliegt. Infolge der Vorschubbewegung des Zugmittels 13 in Umlaufrichtung - gemäß Pfeil 24 - und der Wirkung der Trumkraft im gezogenen Trum 28 wird der Führungsschlitten 30a gegen das Anschlagelement 26a positioniert gehalten, während der Führungsschlitten 30b bei einer Dehnung des Zugmittels 13 über das Stellelement 31 auf den positioniert gehaltenen Führungsschlitten 30a zubewegt, das Zugmittel 13 im rücklaufende Trum 29 gespannt bzw. gestrafft und die Umfangskraft vom Antriebsrad 17 auf das Zugmittel 13 schlupffrei übertragen wird.

In einer bevorzugten Ausführung ist ein Radius bzw. Durchmesser der Antriebs- und Spannräder 17 als auch des weiteren Umlenkrades 16 gleich ausgebildet und ist ein zur Transportebene 12 des Zugmittels 13 paralleler Achsabstand 40 zwischen den Spannräder kleiner bemessen als ein zur Transportebene 12 des Zugmittels 13 paralleler Achsabstand 41 zwischen dem weiteren Umlenkrad 16 und Antriebsrad 17. Das weitere Umlenkrad 16 und Antriebsrad 17 sind in einer parallel zur Transportebene 12 verlaufenden Ebene unterhalb der Spannelemente 19a, b angeordnet.

Wird das weitere Umlenkrad 16 auf einem gegenüber dem Rahmen 10 in zur Spannrichtung - gemäß Pfeil 33 - der Spannelemente 19a, b paralleler Richtung verstellbaren Spannlager 42, welches nur stark vereinfacht in den Fig. dargestellt ist, gelagert, ist eine leichte Montage und Demontage des Zugmittels 13 bei eingebauter Spanneinrichtung 18 sichergestellt. Das Spannlager 42 kann dabei, beispielsweise über eine nicht weiters eingetragene Stellschraube verstellt werden, sodass die Spannung des Zugmittels 13, bei dessen Montage voreingestellt oder zur Demontage gelockert werden kann. Derartige Spannlager 42 sind dem Fachmann geläufig, sodass auf eine detaillierte Erläuterung in dieser Anmeldung verzichtet wird.

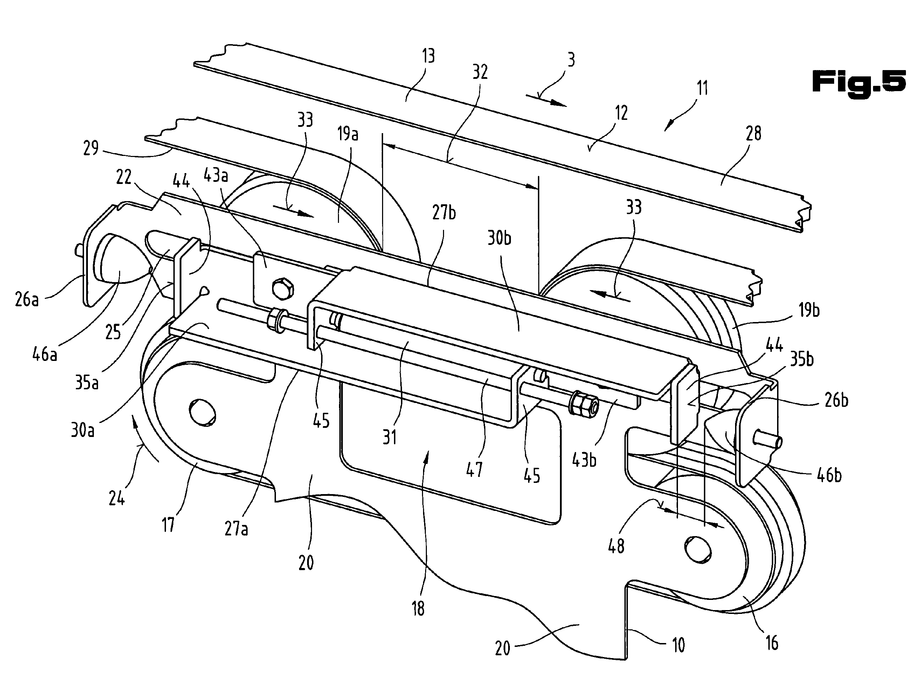

In der Fig. 5 ist ein Teilbereich einer zweiten Ausführung des erfindungsgemäßen Zugmitteltriebes 11 in perspektivischer Ansicht und vereinfacht gezeigt. Der Zugmitteltrieb 11 weist den auf dem Traggestell 2 der Fördereinrichtung 1 befestigten Rahmen 10, das an diesem gelagerte, nicht dargestellte Paar von in Förderrichtung - gemäß Pfeil 3 - im Abstand voneinander angeordneten und benachbart zur Transportebene 12 liegenden Umlenkrädern 15a, b, das am Rahmen 10 gelagerte, weitere Umlenkrad 16 und Antriebsrad 17, das Zugmittel 13 sowie die Spanneinrichtung 18 mit den beiden Spannelementen 19a, b auf. Das Zugmittel 13 ist ausgehend vom Antriebsrad 17 über gegebenenfalls das weitere Umlenkrad 16 und eines der Spannelemente 19a, b und über die benachbart zur Transportebene 12 des Zugmittels 13 angeordneten Umlenkrädern 15a, b und danach über das andere der Spannelemente 19a, b zurück zum Antriebsrad 17 gerührt, wobei das in Umlaufrichtung - gemäß Pfeil 24 - zweite Spannelement 19b am gezogenen Trum 28 und das andere, in Umlaufrichtung - gemäß Pfeil 24 - erste Spannelement 19a am rücklaufenden Trum 29 anliegt.

Der Rahmen 10, insbesondere der Verbindungssteg 22, ist mit der parallel zur Transportebene 12 in Richtung der Längserstreckung des Zugmitteltriebes 12 verlaufenden Kulissenbahn 25 in Form einer Längsführung, beispielsweise eines Längsschlitzes, versehen, entlang welcher die als Führungsschlitten 30a, b ausgebildeten Tragkörper 27a, b verstellbar geführt sind. Dazu sind die Tragkörper 27a, b jeweils mit einer nicht dargestellten, entlang der Kulissenbahn 25 geführt abgestützten Führungsvorrichtung versehen. Das Spannelement 19a, insbesondere das Spannrad, ist über ein Montageblech 43a am Führungsschlitten 30a und das Spannelement 19b, insbesondere das Spannrad, über ein Montageblech 43b am Führungsschlitten 30b gelagert, insbesondere frei drehbar.

Die beiden Führungsschlitten 30a, b sind über wenigstens ein längenveränderbares Stellelement 31 bewegungsmäßig miteinander gekoppelt. Nach dieser Ausführung ist das Stellelement 31 durch eine Gasdruckfeder gebildet. Andererseits kann dieses jedoch auch als zylindrische Schraubenfeder, wie Druckfeder, ausgebildet sein. Die Führungsschlitten 30a, b sind jeweils durch einen im Querschnitt vorzugsweise L-förmigen Profilwinkel mit an den Enden senkrecht zur Verstellbewegung der Führungsschlitten 30a, b abgewinkelten Laschen 44, 45 gebildet. Die Führungsschlitten 30a, b bilden an ihren voneinander abgewandten Seiten mit den entfernten Laschen 44 die Anschlagflächen 35a, b aus. Das Stellelement 31, insbesondere die Gasdruckfeder, ist zwischen den benachbarten Laschen 45 der überlappend angeordneten Führungsschlitten 30a, b eingespannt. Die während des Betriebes des Zugmitteltriebes 11 durch Dehnung, Verschleiß, klimatische und sonstige Bedingungen auftretende Verlängerung des Zugmittels 13, kann über das längenveränderbare Stellelement 31 ausgeglichen werden. Bei zunehmender Verlängerung des Zugmittels 13 wird über das Stellelement 31 der Abstand zwischen den Laschen 45 der gegeneinander verstellbaren Führungsschlitten 30a, b vergrößert, die Spannelemente 19a, b aufeinander zubewegt und der Abstand 32 zwischen den Spannelemente 19a, b verkleinert sowie die aufeinander zugerichteten Spannkräfte von den Spannelementen 19a, b auf das Zugmittel 13 soweit erhöht, dass die vom Antriebsrad 17 auf das Zugmittel 13 übertragene Umfangskraft im Wesentlichen schlupffrei übertragen wird.

Wie bereits oben zu den Fig. 3 und 4 ausführlich beschrieben, ist der mit dem am gezogenen Trum 28 anliegenden Spannelement 19b versehene Führungsschlitten 30b mit seiner Anschlagfläche 35b gegen das Anschlagelement 26b abgestützt und positioniert gehalten, wie dies aus Gründen der besseren Übersicht in Fig. 5 nicht dargestellt ist.

Eine möglichst schonende Betriebsweise der Fördereinrichtung 1 wird dann geschaffen, wenn die beim Aufprall der Führungsschlitten 30a, b an das jeweilige Anschlagelement 26a, b hervorgerufene Aufprallenergie über Dämpfungselemente 46a, b zumindest teilweise absorbiert wird. Diese Dämpfungselemente 46a, b können beispielsweise durch einen Puffer aus elastisch nachgiebigen, reversiblen Kunststoff, wie beispielsweise elastomeren Kunststoff, oder Gummi und dgl. oder einen mit komprimierbaren Medium, wie Luft, Gas und dgl., befüllten Stoßdämpfer oder einen mit Hydrauliköl befüllten Industrie-Stoßdämpfer gebildet sein. Dieser Industrie-Stoßdämpfer ermöglicht beispielsweise eine konstante Verzögerung. Beim Abbremsvorgang wird die Kolbenstange in den Stoßdämpfer eingeschoben. Das Hydrauliköl, das sich vor dem Kolben befindet, wird durch Drosselöffnungen verdrängt und von einem Absorber aufgenommen.

Eine andere, nicht gezeigte Ausführung besteht darin, dass die Dämpfungselemente 46a, b an den voneinander entfernten Laschen 44 der Führungsschlitten 30a, b angeordnet sind und diese die Anschlagflächen 35a, b ausbilden.

Wie in dieser Figur weiters ersichtlich, weist die Spanneinrichtung 18 neben den Spannelementen 19a, b, Führungsschlitten 30a, b und dem wenigstens einen Stellelement 31 zusätzlich ein Montagehilfsmittel 47, insbesondere eine Gewindestange, auf, mit der die Handhabung beim Auswechseln des Zugmittels 13 vereinfacht wird. Mit Hilfe des Montagehilfsmittels 47 wird bei der Demontage des Zugmittels 13 durch Verkleinerung des Abstandes zwischen den Laschen 45 die Gasfeder zusammengedrückt, die Spannkräfte auf das Zugmittel 13 aufgehoben und das Zugmittel 13 entspannt.

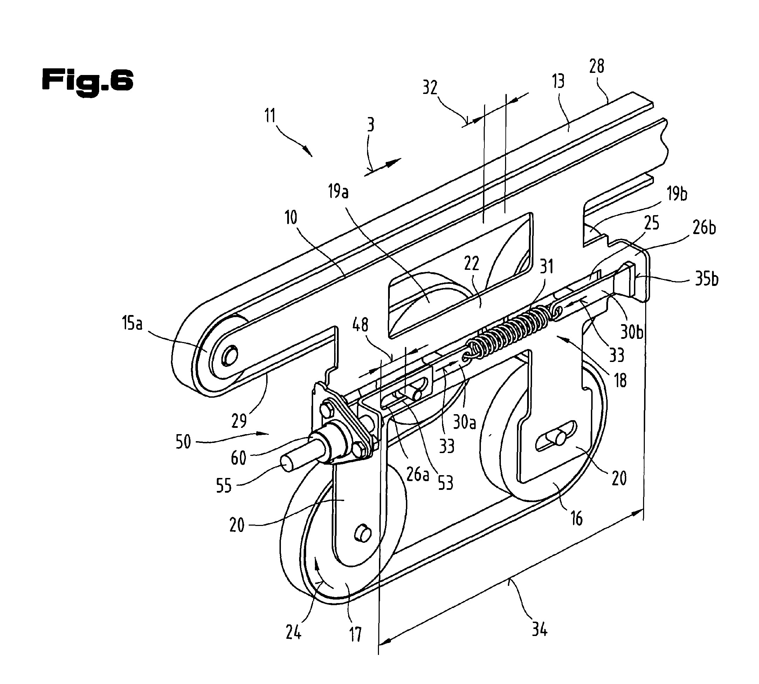

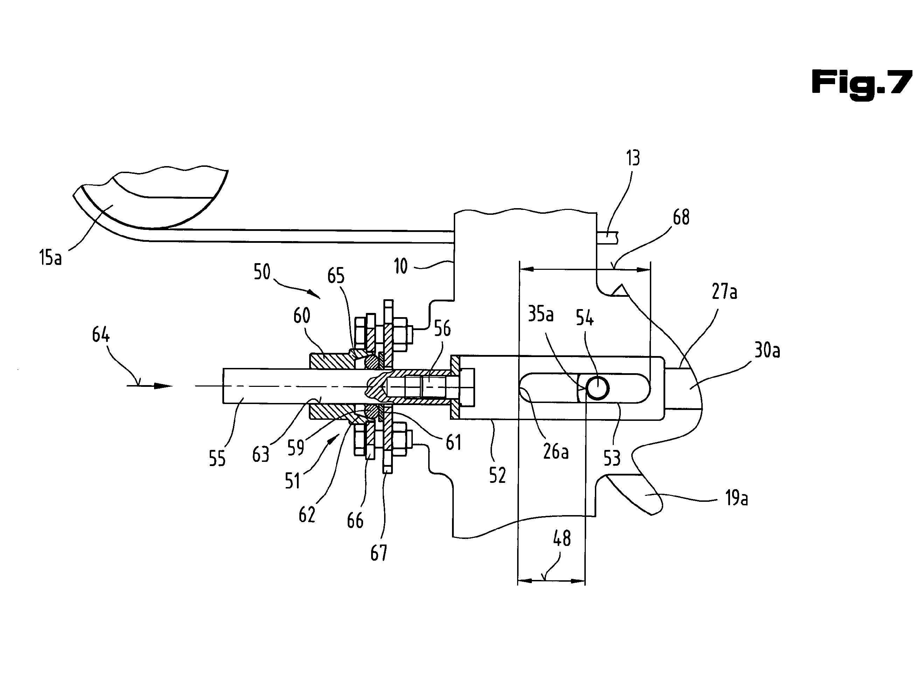

In der Fig. 6 ist ein Teilbereich des erfindungsgemäßen Zugmitteltriebes 11 in einer dritten Ausführung und in Fig. 7 eine Ausschnittsvergrößerung aus Fig. 6 gezeigt. Der Zugmitteltrieb 11 weist den Rahmen 10, das Paar von in Förderrichtung - gemäß Pfeil 3 - im Abstand voneinander angeordneten Umlenkräder 15a, b, das weitere Umlenkrad 16, das Antriebsrad 17 und das Zugmittel 13 sowie die oben beschriebene Spanneinrichtung 18 mit den beiden Spannelementen 19a, b auf. Die Spannelemente 19a, b sind an voneinander getrennt ausgebildeten und in Längsrichtung der Kulissenbahn 25 gegeneinander verstellbaren Tragkörpern 27a, b bzw. Führungsschlitten 30a, b drehbar gelagert. Die Führungsschlitten 30a, b sind über das wenigstens eine längenveränderbare Stellelement 31 bewegungsmäßig miteinander gekoppelt.

Diese Ausführung eignet sich bestens für Fördereinrichtungen 1, bei denen mit einem häufigen Wechsel vom Normalbetrieb in den Reversierbetrieb, daher Änderung der Umlaufrichtung - gemäß Pfeil 24 - bzw. der Förderrichtung - gemäß Pfeil 3 - der in Fig. 1 eingetragenen Stückgüter 4 oder großen Schwankungen im Fördergewicht und der Fördergeschwindigkeit der Stückgüter 4 gerechnet werden muss.

Wie bereits oben beschrieben, wird mit zunehmender Längung des Zugmittels 13 das gemäß diesen Fig. im rücklaufenden Trum 29 anliegende, erste Spannelement 19a in Richtung auf das im gezogenen Trum 29 anliegende, positioniert gehaltene, zweite Spannelement 19a zubewegt, ebenso der Führungsschlitten 30a, wodurch sich auch ein Verstellabstand 48, wie in den einzelnen Fig. eingetragen, zwischen der Anschlagfläche 35a und dem Anschlagelement 26a vergrößert. Somit muss nach Umkehr der Umlaufrichtung - gemäß Pfeil 24 - des Zugmittels 13, der Führungsschlitten 30a einen längeren Verstellabstand 48 zurücklegen.

Um diesen Verstellabstand 48 selbst bei durch Schwankungen der Fördergeschwindigkeit und des Fördergewichtes, Alterung und dgl. hervorgerufener Verlängerung des Zugmittels 13 möglichst niedrig bzw. konstant zu halten, ist es gemäß dieser Ausführung vorgesehen, dass zumindest eines der Anschlagelemente 26a über eine die Spanneinrichtung 18 umfassende Nachstellvorrichtung 50 in Richtung zum betreffenden Führungsschlitten 30a nachstellbar ausgebildet ist. Das Anschlagelemente 26a kann somit in Richtung auf das gegenüberliegende Anschlagelemente 26b zubewegt und der durch die Anschlagelemente 26a, b begrenzte Verstellweg 34 verkürzt werden.

Die einseitig wirkende, selbsttätige Nachstellvorrichtung 50 umfasst eine Arretiervorrichtung 51 und ein zwischen dieser und dem betreffenden Tragkörper 27a bzw. Führungsschlitten 30a angeordnetes, vorzugsweise L-förmiges Koppelungselement 52. Der betreffende Tragkörper 27a und das Koppelungselement 52 weisen miteinander in Eingriff stehende Führungselemente 53, 54 auf. Das Führungselement 53 vom Koppelungselement 52 ist durch einen parallel zur Transportebene 12 verlaufenden, begrenzten Längsschlitz und das Führungselement 54 vom Tragkörper durch einen in den Längsschlitz vorragenden, bevorzugt zylindrischen Führungsansatz gebildet. Der Längsschlitz im Koppelungsschlitten 52 bildet mit seinem vom Tragkörper 27a entfernt liegenden Ende das Anschlagelement 26a aus, während das gegenüberliegende Anschlagelement 26b ortsfest am Rahmen 10 angeordnet ist. Die Anschlagfläche 35a am Tragkörper 27a ist durch den Führungsansatz gebildet. Das Koppelungselement 52 ist mit seinem vom betreffenden Tragkörper 27a abgewandten Ende mit einer die Arretiervorrichtung 51 aufweisenden Schubstange 55 verbunden, insbesondere über ein Verbindungselement 56 verschraubt.

Die Arretiervorrichtung 51 weist neben der zylindrischen Schubstange 55 zumindest ein auf dieser gelagertes Arretierelement, insbesondere einen Klemmkörper 59, und einen zur Schubstange 55 koaxialen, rotationssymmetrischen Aufnahmekörper 60 sowie ein Federelement 61 auf. Der Aufnahmekörper 60 ist mit einer in der dem Tragkörper 27a zugewandten Seitenfläche vertieft angeordneten Ausnehmung 62 und einer von der Schubstange 55 durchsetzten Lagerbohrung 63 versehen. Die zur Schubstange 55 koaxiale Ausnehmung 62 bildet eine in zur Nachstellrichtung - gemäß Pfeil 64 - der Schubstange 55 bzw. des Anschlagelementes 26a entgegengesetzter Richtung konisch verjüngende Eingriffsfläche 65 aus. Der Klemmkörper 59 ist nach dieser Ausführung durch in einem nicht dargestellten Käfig gehaltene Klemmrollen gebildet und ist der Klemmkörper bzw. sind die Klemmrollen mit dem Käfig innerhalb der Ausnehmung 62 im Aufnahmekörper 60 auf der Schubstange 55 axial verschiebbar gelagert. Der Aufnahmekörper 60 ist mit einem Flansch 66 an einem Rahmenteil 67 des Rahmens 10 bevorzugt lösbar verbunden, insbesondere verschraubt.

Der Klemmkörper 59 ist über das zwischen diesem und dem Rahmenteil 67 angeordnete Federelement 61 entgegen der Nachstellrichtung - gemäß Pfeil 64 - gegen die konische Eingriffsfläche 65 im Aufnahmekörper 60 vorgespannt. Auf diese Weise wird über den Klemmkörper 59 eine gegen die Nachstellrichtung - gemäß Pfeil 64 - des Anschlagelementes 26a gerichtete Verstellbewegung der Schubstange 55 blockiert.

Der Längsschlitz im Koppelungselement 52 weist eine Führungslänge 68 auf, die so bemessen ist, dass eine auf Grund der vom Gewicht der zu transportierenden Stückgüter 4 abhängige Verlängerung des Zugmittels 13, keine Nachstellung des Anschlagelementes 26a auslöst. Nur eine darüber hinaus gehende, beispielsweise durch Alterung hervorgerufene Verlängerung des Zugmittels 13, bewirkt eine Nachstellung des Anschlagelementes 26a, wie im Nachfolgenden beschrieben.

Tritt während des Normalbetriebes des Zugmitteltriebes 11 eine Längung des Zugmittels 13 ein, werden die Spannelemente 19a, b über das Stellelement 31 soweit aufeinander zubewegt, dass die Umfangskraft vom Antriebsrad 17 auf das Zugmittel 13 im Wesentlichen schlupffrei übertragen wird. Gemäß dieser Ausführung wird mit der Verstellbewegung des Spannelementes 19a und Führungsschlittens 30a ebenso der entlang dem Längsschlitz gleitend geführte Führungsansatz in Richtung auf das dem Führungsschlitten 30a zugekehrte Ende des Längsschlitzes bewegt.

Wird dabei der das Spannelement 19a tragende Führungsschlitten 30a soweit verstellt, dass die Führungslänge 68 überschritten wird, liegt der Führungsansatz am dem Führungsschlitten 30a benachbarten Ende des Längsschlitzes an und wird mit der weiteren Verstellbewegung des Führungsschlittens 30a in Richtung des diesem gegenüberliegenden Führungsschlittens 30b, das Koppelungselement 52 als auch die Schubstange 55 in Nachstellrichtung - gemäß Pfeil 64 - verschoben. Während der Verstellung der Schubstange 55 in Nachstellrichtung - gemäß Pfeil 64 - wird die Vorspannkraft des Federelementes 61 auf den gegen die konische Eingriffsfläche 65 abgestützten Klemmkörper 59 aufgehoben und die Arretierung der Schubstange 55 gegenüber dem Aufnahmekörper 60 gelöst.

Da nun aber auch das vom Koppelungselement 52 ausgebildete Anschlagelement 26a in Nachstellrichtung - gemäß Pfeil 64 - auf den Führungsschlitten 30a zubewegt wird, wird auch der Verstellabstand 48 zwischen der vom Führungsansatz ausgebildeten Anschlagfläche 35a und dem Anschlagelement 26a verkürzt, sodass im Reversierbetrieb, daher nach Umkehr der Umlaufrichtung - gemäß Pfeil 24 - der das am gezogenen Trum 28 anliegende Spannelement 19a tragende Führungsschlitten 30a nur um den verringerten Verstellabstand 48 bis zum Anschlagelement 26a verstellt werden muss.

Durch die Arretiervorrichtung 51 wird auch dann, wenn der Führungsfortsatz mit hoher Verstellgeschwindigkeit am Anschlagelement 26a auftrifft, eine gegen die Nachstellrichtung - gemäß Pfeil 64 - des Anschlagelementes 26a gerichtete Verstellbewegung der Schubstange 55 als auch des Anschlagelementes 26a blockiert. Dadurch kann eine unnötig lange Verstellbewegung der Führungsschlitten 30a, b mit den Spannelementen 19a, b bei Änderung der Umlaufrichtung - gemäß Pfeil 24 - des Zugmittels 13 vermieden werden.

Eine andere, nicht dargestellte Ausführung des Klemmkörpers 59 besteht darin, dass dieser durch einen zur Schubstange 55 koaxialen, rotationssymmetrischen und auf dieser axial verschiebbar gelagerten Klemmring gebildet ist, der eine zur Eingriffsfläche 65 im Aufnahmekörper 60 komplementäre, konische Eingriffsfläche ausbildet.

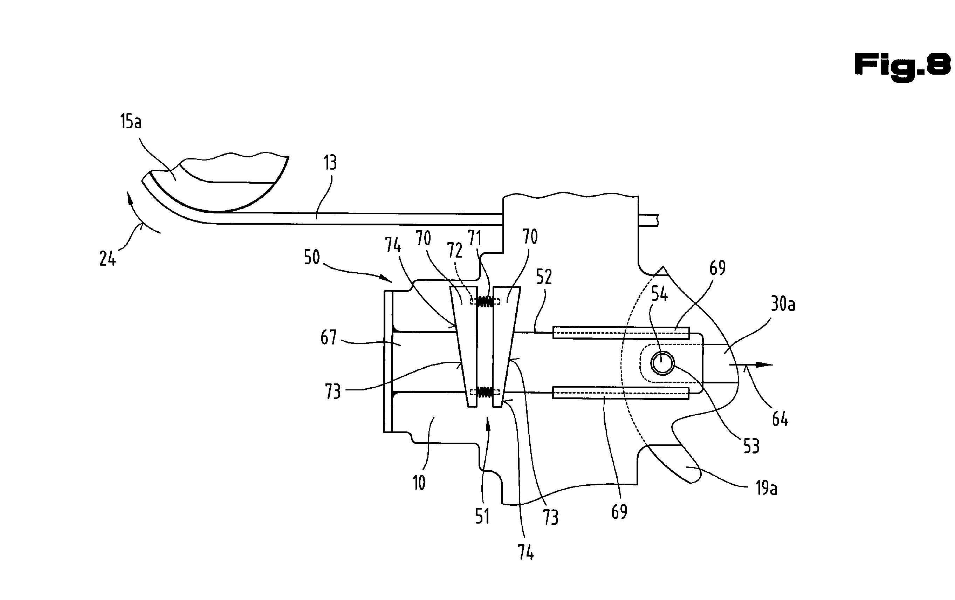

In den gemeinsam beschriebenen Fig. 8 bis 10 ist eine weitere Ausführungsvariante der Nachstellvorrichtung 50 in stark vereinfachter Darstellung gezeigt. Diese ist zwischen dem Rahmen 10 des Zugmitteltriebes 11 und einem der Führungsschlitten 30a, b angeordnet und weist die Arretiervorrichtung 51 und das zwischen dieser und dem betreffenden Führungsschlitten 30a angeordnete Koppelungselement 52 sowie eine das Koppelungselement 52 verschiebbar lagernde Längsführung auf. Die Längsführung weist zwei beidseits zum Koppelungselement 52 angeordnete Höhen- und Seitenführungsbahnen 69 auf, über die das Koppelungselement 52 am Rahmen 10 im Wesentlichen spielfrei geführt gelagert ist. Diese Höhen- und Seitenführungsbahnen 69 können durch eine Gleit- oder Wälzführung, wie beispielsweise eine Schwalbenschwanz- und Prismenführung oder Kugelumlaufführung etc., gebildet sein. Das Koppelungselement 52 ist als prismatischer Schlitten ausgebildet und weist ebenso wie der Führungsschlitten 30a die miteinander in Eingriff stehenden Führungselemente 53, 54 auf. Das Führungselement 54 am Führungsschlitten 30a ist durch einen zylindrischen Führungsansatz und das Führungselement 53 am Koppelungsschlitten 52 durch eine zylindrische Bohrung gebildet.

Die Nachstellvorrichtung 50 weist die Arretiervorrichtung 51 mit zumindest zwei in Nachstellrichtung - gemäß Pfeil 64 - im Abstand voneinander angeordnete Arretierelemente, insbesondere Klemmkeile 70, und wenigstens ein, bevorzugt zwei zwischen den Klemmkeilen 70 vorgespannte Federelemente 71 auf. Die Klemmkeile 70 sind auf parallel zur Längserstreckung des Koppelungselementes 52 verlaufenden Führungsbolzen 72 relativ zueinander und gegenüber dem Rahmen 10 verstellbar gelagert. Die Federelemente 71, insbesondere Druckfedern, umgeben die Führungsbolzen 72.

Der Rahmenteil 67 des Rahmens 10 ist an seiner dem Führungsschlitten 30a zugewandten Seite und das Koppelungselement 52 auf der dem Führungsschlitten 30a abgewandten Seite mit in Richtung der Schwerkraft von oben nach unten geneigt aufeinander zulaufenden und in Nachstellrichtung - gemäß Pfeil 64 - voneinander beabstandeten Eingriffsflächen 73 versehen. Zwischen diesen Eingriffsflächen 73 sind die unter der Wirkung der Federelemente 71 in einander entgegengesetzten Richtungen vorgespannten Klemmkeile 70 angeordnet, die mit ihren voneinander abgewandten und dem Rahmenteil 67 sowie dem Koppelungselement 52 zugewandt, geneigt aufeinander zulaufenden Eingriffsflächen 74 gegen die Eingriffsflächen 73 des Rahmenteiles 67 und Koppelungselementes 52 abgestützt sind. Die Eingriffsflächen 74 der Klemmkeile 70 sind komplementär zu den Eingriffsflächen 73 des Rahmenteiles 67 und Koppelungselementes 52 ausgebildet.

Diese Ausführung der Nachstellvorrichtung 50 wird bei Fördereinrichtungen 1 bzw. Zugmitteltrieben 11 mit geringerer Förderlänge, beispielsweise 3 m bis 6 m, eingesetzt, wo zu erwarten, dass eine Längung des Zugmittels 13 nur in begrenztem Ausmaß eintreten wird, oder wenn Stückgüter 4 mit stark unterschiedlichen Gewichten zu transportieren sind.

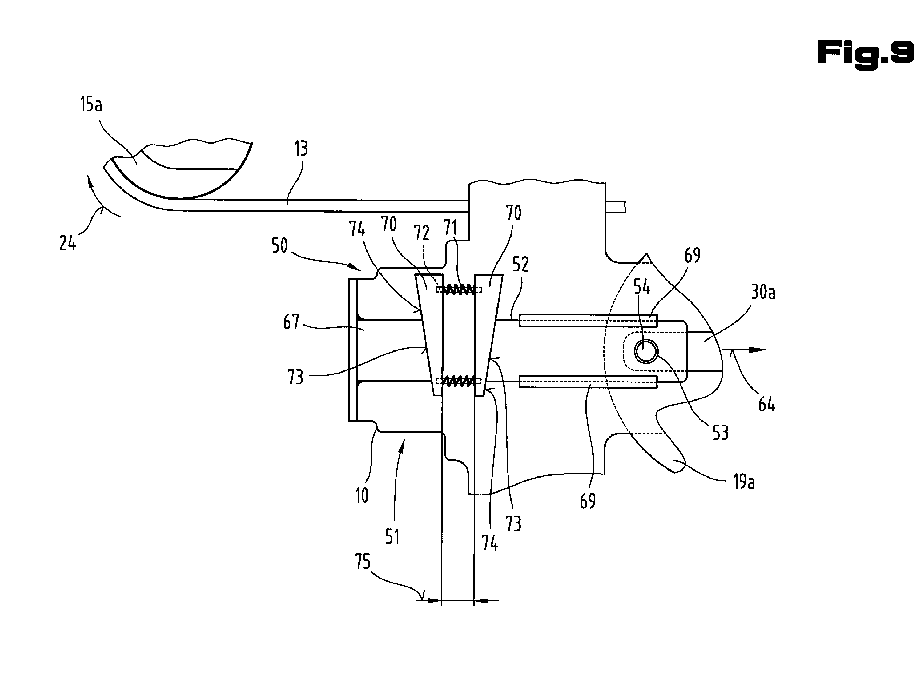

Fig. 8 zeigt die Nachstellvorrichtung 50 in deren Ausgangsstellung, in der das Zugmittel 13 unbelastet ist, wohingegen Fig. 9 die Nachstellvorrichtung 50 in einer ersten Betätigungsstellung zeigt, in welcher auf Grund der von der zu transportierenden Last der Stückgüter 4 (Betriebslast) abhängigen Längung des Zugmittels 13, eine selbsttätige Nachstellung des Führungsschlittens 30a in Nachstellrichtung - gemäß Pfeil 64 - erfolgt. Der Führungsschlitten 30b (wie in Fig. 6 eingetragen) ist gegen das Anschlagelement 26b (wie in Fig. 6 eingetragen) abgestützt, da das Spannelement 19b (wie in Fig. 6 eingetragen) im gezogenen Trum anliegt. Das Spannelement 19a liegt im rücklaufenden Trum an und wird über dieses die Spannung im Zugmittel 13 erzeugt. Wird die Umlaufrichtung - gemäß Pfeil 24 - reversiert, liegt das Spannelement 19a im gezogenen Trum an und wird die Spannung im Zugmittel 13 über das Spannelement 19b erzeugt. Der Antrieb des Zugmittels 13 erfolgt dabei über das Antriebsrad 17, wie beispielsweise in Fig. 6 eingetragen.

Mit zunehmender Längung des Zugmittels 13 wandert der Führungsschlitten 30a aus der in Fig. 8 eingetragenen Position in die in Fig. 9 eingetragene Position. Dabei wird über das Führungselement 54 das Koppelungselement 52 in Nachstellrichtung - gemäß Pfeil 64 - auf den dem betreffenden Führungsschlitten 30a gegenüberliegend angeordneten Führungsschlitten 30b zubewegt und vom Rahmenteil 67 wegbewegt, sodass die beiden Klemmkeile 70 durch die Wirkung der Federelemente 71 begrenzt auseinanderbewegt werden.

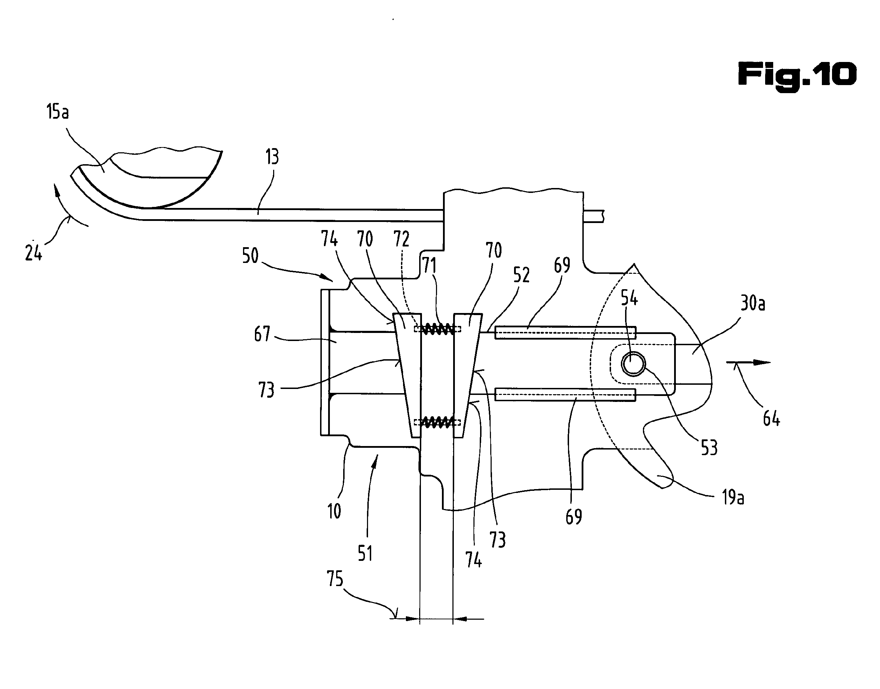

Tritt eine zusätzliche Längung bzw. Dehnung des Zugmittels 13 in Folge Alterung auf, wird die Nachstellvorrichtung 50 in eine zweite Betätigungsstellung bewegt, wie in Fig. 10 gezeigt. Dabei wird das Koppelungselement 52 vom Rahmenteil 67 soweit entfernt, dass die Klemmkeile 70 über ein in Fig. 9 eingetragenes, begrenztes, maximales Maß 75 hinaus voneinander verstellt werden und sich die beiden Klemmkeile 70 in Richtung der Wirkung der Schwerkraft nach unten bewegen.

Somit sind in allen Betriebszuständen der Fördereinrichtung 1, die Klemmkeile 70 mit ihren Eingriffsflächen 74 zuverlässig gegen die Eingriffsflächen 73 des Rahmenteiles 67 und Koppelungselementes 52 vorgespannt.

Diese Ausführung hat zusätzlich den Vorteil, dass bei einer Umkehr der Umlaufrichtung die Federelemente 71 auch als Dämpfungselemente wirksam werden und die durch die geringfügige, schlagartige Verstellbewegung vom Koppelelement 52 bzw. Führungsschlitten 30a, b hervorgerufene, kinetische Energie über die Federelemente 71 absorbiert wird.

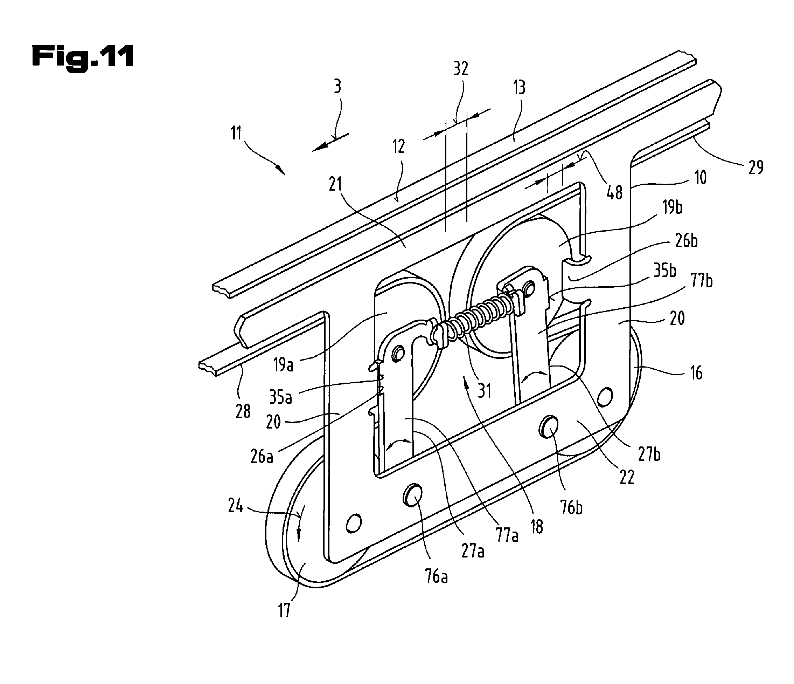

In der Fig. 11 ist eine vierte Ausführungsvariante des erfindungsgemäßen Zugmitteltriebes 11 für eine in Fig. 1 dargestellte Fördereinrichtung 1 in perspektivischer Ansicht gezeigt. Der Zugmitteltrieb 11 weist den am Traggestell 2 der Fördereinrichtung 1 befestigten Rahmen 10, die an diesem gelagerten, nicht eingetragenen, in Förderrichtung - gemäß Pfeil 3 - im Abstand voneinander angeordneten und benachbart zur Transportebene 12 liegenden Umlenkräder 15a, b, das am Rahmen 10 drehbar gelagerte, weitere Umlenkrad 16 und Antriebsrad 17, und das Zugmittel 13 sowie die Spanneinrichtung 18 auf. Der Rahmen 10 umfasst zwischen den beiden Umlenkrädern 15a, b zwei in Längserstreckung des Zugmitteltriebes 11 im Abstand voneinander angeordnete, etwa senkrecht zur Transportebene 12 ausgerichtete Tragschenkel 20 und den die Tragschenkel 20 miteinander verbindenden und seitlich an diesen in entgegengesetzten Richtungen annähernd über die gesamte Länge des Zugmitteltriebes 11 erstreckenden Tragarm 21 sowie den sich zwischen den Tragschenkeln 20 im Wesentlichen parallel zur Transportebene 12 erstreckenden Verbindungssteg 22.

Die Spanneinrichtung 18 besteht aus zwei in Umlaufrichtung - gemäß Pfeil 24 - des Zugmittels 13 hintereinander angeordneten und relativ zueinander verstellbaren Tragkörpern 27a, b, die nach dieser Ausführung durch am Rahmen 10, insbesondere am Verbindungssteg 22, und senkrecht zur Längserstreckung des Zugmitteltriebes 11 verlaufende Achsen 76a, b schwenkbar gelagerte Schwenkhebel 77a, b gebildet sind. Die Schwenkhebel 77a, b sind über wenigstens ein längenveränderbares Stellelement 31, insbesondere eine Zugfeder, bewegungsmäßig miteinander gekoppelt und auf ihren voneinander abgewandten Seiten mit je einer Anschlagfläche 35a, b versehen. An den freien Enden der Schwenkhebel 77a, b sind jeweils ein Spannelement 19a, b, insbesondere ein Spannrad, frei drehbar gelagert.

Die senkrecht aufragenden, parallelen Tragschenkel 20 sind auf ihrer einander zugewandten Seite mit je einem von diesen abgewinkelten Anschlagelement 26a, b versehen. Die Schwenkhebel 77a, b der Spanneinrichtung 18 sind relativ zueinander und zwischen den beiden in deren Verstellrichtung distanziert voneinander angeordneten Anschlagelementen 26a, b verstellbar, insbesondere schwenkbar.

Wie in dieser Figur eingetragen, ist der mit dem im Bereich des gezogenen Trums 28 des Zugmittels 13 anliegenden Spannelement 19a versehene Schwenkhebel 77a mit seiner Anschlagfläche 35a gegen das ortsfeste Anschlagelement 26a abgestützt und wird das Spannelement 19a bei gleichbleibender Umlaufrichtung - gemäß Pfeil 24 - in seiner eingestellten Lage mittels dem gezogenen Trum 28 positioniert gehalten. Das am Schwenkhebel 77b gelagerte und im Bereich des rücklaufenden Trums 29 des Zugmittels 13 anliegende Spannelement 19b, wird über das Stellelement 31 mit zunehmender Längung des Zugmittels 13 in Richtung auf das in seiner Lage positioniert gehaltene Spannelement 19a zubewegt, der Abstand 32 zwischen den Spannelementen 19a, b verringert und das Zugmittel 13 selbsttätig nachgespannt. Dabei ist von wesentlichem Vorteil, dass die notwendige Spannung im Zugmittel 13 während des Betriebes des Zugmitteltriebes 11 selbst bei Dehnung des Zugmittels 13 über das mittels dem Stellelement 31 kraftbeaufschlagte Spannelement 19b selbsttätig aufrecht erhalten bleibt.

Nach Umkehr der Umlaufrichtung - gemäß Pfeil 24 - des Zugmittels 13 liegt das Spannelement 19b am gezogenen Trum 28 an und ist der Schwenkhebel 76b mit seiner Anschlagfläche 35b gegen das Anschlagelement 26b abgestützt und wird das Spannelement 19b bei gleichbleibender Umlaufrichtung - gemäß Pfeil 24 - in seiner eingestellten Lage mittels dem gezogenen Trum 28 positioniert gehalten, während das im rücklaufenden Trum 29 anliegende Spannelement 19a mit zunehmender Längung des Zugmittels 13 über das Stellelement 31 in Richtung auf das gegenüberliegende Spannelement 19b zubewegt wird.

Wie in den einzelnen vorhergehenden Fig. eingetragen, ergibt sich der Verstellabstand 48 in Abhängigkeit der Länge der Fördereinrichtung 1 bzw. des Zugmittels 13, da es bekannt ist, dass besonders lange Zugmittel 13 einer hohen Dehnung bzw. Längung und kürzere Zugmittel 13 nur einer kurzen Längung unterliegen. Der Wechsel vom Normalbetrieb in den Reversierbetrieb bewirkt mit zunehmendem Verstellabstand 48 auch eine unerwünschte Erhöhung der Geschwindigkeitsenergie der Führungsschlitten 30a, b während deren Verstellung, sodass mit dem Aufprall des Führungsschlittens 30a, b mit seiner Anschlagfläche 35a, b gegen das Anschlagelement 26a, b, einerseits eine hohe mechanische Belastung des Rahmens 10 und der Spanneinrichtung 18 verbunden ist und andererseits das Zugmittel 13 in unerwünschte Schwingungen versetzt wird.

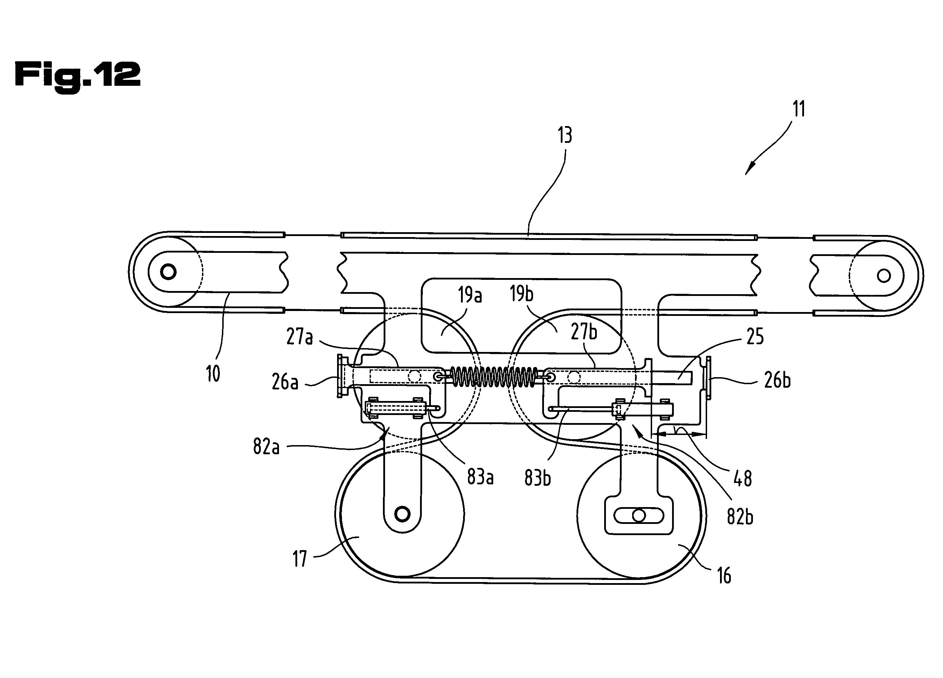

Um diesem Nachteil entgegenzuwirken ist es nun vorgesehen, wie in Fig. 12 dargestellt, dass zwischen dem jeweiligen Tragkörper 27a, b bzw. Führungsschlitten 30a, b und dem Rahmen 10 ein Verstellgeschwindigkeitsbegrenzer 82a, b in Form einer Zylinderkolbenanordnung angeordnet ist. Dabei werden die Tragkörper 27a, b während ihrem Verstellvorgang um den Verstellabstand 48 mit einstellbarer und konstanter Verstellgeschwindigkeit synchron in Richtung auf das Anschlagelement 26b verstellt. Diese aus dem Stand der Technik bekannten Verstellgeschwindigkeitsbegrenzer 84a, b sind bevorzugt durch einen oben beschriebenen Industrie-Stoßdämpfer mit integrierten Drosselöffnungen gebildet, mit dem die maximal zulässige Verstellgeschwindigkeit der Tragkörper 27a, b eingestellt werden kann. Jede Zylinderkolbenanordnung ist über eine Kolbenstange 83a, b am Tragköper 27a, b angelenkt. Andererseits kann die Zylinderkolbenanordnung auch mit einem in dieser eingeschlossenen, komprimierbaren Medium, wie Luft oder Gas, gefüllt sein.

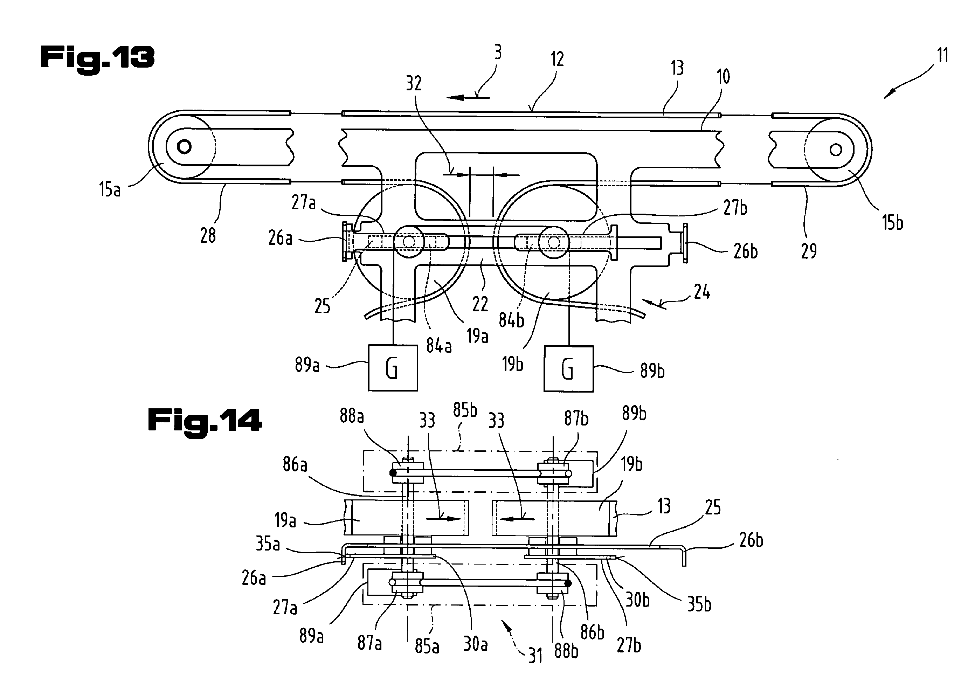

In den gemeinsam beschriebenen Fig. 13 und 14 ist der erfindungsgemäße Zugmitteltrieb 11 mit einer anderen Ausführungsvariante der Spanneinrichtung 18 in unterschiedlichen Ansichten gezeigt. Der Aufbau des Zugmitteltriebes 11 wurde bereits oben ausführlich beschrieben und kann auf diese Figuren übertragen werden. Die Spanneinrichtung 18 umfasst in Umlaufrichtung - gemäß Pfeil 24 - des Zugmittels 13 zwei hintereinander angeordnete und relativ zueinander verstellbare Tragkörper 27a, b und die an diesen jeweils gelagerten Spannelemente 19a, b. Die prismenartigen Trägkörper 27a, b sind jeweils über die Führungsvorrichtung 84a, b entlang der parallel zur Transportebene 12 des Zugmitteltriebes 11 verlaufenden, schlitzartigen Kulissenbahn 25 geführt gelagert. Das Zugmittel 13 ist entsprechend der eingetragenen Umlaufrichtung - gemäß Pfeil 24 - mit seinem gezogenen Trum 28 um das Spannelement 19a und mit seinem rücklaufenden Trum 29 um das Spannelement 19b, die Umlenkräder 15a, b sowie um das nicht dargestellte, weitere Umlenk- und Antriebsrad 16, 17 geführt. Die beiden Spannelemente 19a, b sind mit aufeinander zugerichteten Spannkräften - gemäß den Pfeilen 33 - beaufschlagt und in einem Abstand 32 voneinander angeordnet, der über ein Stellelement 31 verstellbar ausgebildet ist.

Das Stellelement 31 ist beispielsweise durch zwei gewichtsbelastete Seilzüge 85a, b gebildet. Wie in Fig. 14 ersichtlich, ist der Führungsschlitten 30a mit einer senkrecht zur Längserstreckung des Zugmitteltriebes 11 ausgerichteten Achse 86a versehen, die die Kulissenbahn 25 im Rahmen 10 senkrecht durchsetzt und auf der am, in Richtung des Führungsschlittens 30a herausragenden, ersten Achsenabschnitt eine Umlenkrolle 87a für die Führung des ersten Seilzuges 85a frei drehbar gelagert und am in entgegengesetzter Richtung aus der Kulissenbahn 25 herausragenden, zweiten Achsenabschnitt das erste Spannelement 19a und ein Befestigungselement 88a für die Befestigung vom freien Ende des zweiten Seilzuges 85b angeordnet ist. Ebenso ist der Führungsschlitten 30b mit einer senkrecht zur Längserstreckung des Zugmitteltriebes 11 ausgerichteten Achse 86b versehen, die die Kulissenbahn 25 im Rahmen 10 senkrecht durchsetzt und auf der am, in Richtung des Führungsschlittens 30b herausragenden, ersten Achsenabschnitt ein Befestigungselement 88b für die Befestigung vom freien Ende des ersten Seilzuges 85a angeordnet und am in entgegengesetzter Richtung aus der Kulissenbahn 25 herausragenden, zweiten Achsenabschnitt das zweite Spannelement 19b und eine Umlenkrolle 87b für die Führung des zweiten Seilzuges 85b frei drehbar gelagert ist.

Der erste Seilzug 85a umfasst ein Seil, das mit seinem freien, ersten Ende über das Befestigungselement 88b mit der Achse 86b des Führungsschlittens 30b fest verbunden und über die an der Achse 86a des Führungsschlittens 30a drehbar gelagerte Umlenkrolle 87a geführt sowie an seinem gegenüberliegenden freien, zweiten Ende mit einem Gewicht 89a kraftbeaufschlagt ist. Der zweite Seilzug 85b ist zum ersten Seilzug 85a spiegelverkehrt angeordnet, wonach das Seil mit seinem freien, ersten Ende über das an der Achse 86a des ersten Führungsschlittens 30a angeordnete Befestigungselement 88a fixiert und über die an der Achse 86b des zweiten Führungsschlittens 30b drehbar gelagerte Umlenkrolle 87b geführt sowie an seinem gegenüberliegenden freien, zweiten Ende mit dem Gewicht 89b kraftbeaufschlagt ist.

Somit sind die beiden voneinander getrennt ausgebildeten Führungsschlitten 30a, b über die das Stellelement 31 bildenden, gewichtsbelasteten Seilzüge 85a, b bewegungsmäßig miteinander gekoppelt und ist jener Führungsschlitten 30a, auf dem das im Bereich des gezogenen Trums 28 anliegenden Spannelement 19a angeordnet ist, mit seiner Anschlagfläche 35a gegen das Anschlagelement 26a abgestützt und in dieser Lage so lange gehalten, bis die Umlaufrichtung - gemäß Pfeil 24 - reversiert wird.

Eine andere nicht gezeigte Ausführung besteht darin, dass das Stellelement 31 durch nur einen gewichtsbelasteten Seilzug gebildet ist. Die Spanneinrichtung 18 ist hierzu im wesentlichen wie in Fig. 11 aufgebaut, mit dem Unterschied, dass die Feder durch einen gewichtsbelasteten Seilzug ersetzt wird und am freien Ende der Schwenkhebel 77a, b zusätzlich jeweils eine Umlenkrolle drehbar gelagert ist. Das Seil ist mit einem ersten Ende am Rahmen 10, insbesondere am rechten Tragschenkel 20, befestigt und zunächst um die am linken Schwenkhebel 77a gelagerte, erste Umlenkrolle, danach um die am rechten Schwenkhebel 77b gelagerte, zweite Umlenkrolle und sodann um eine am Rahmen 10, insbesondere am linken Tragschenkel 20, drehbar gelagerte, weitere Umlenkrolle geführt. Am freien, zweiten Ende vom Seil, ist ein Gewicht befestigt oder wird am freien Ende mit einer Spannkraft angezogen, die von einer Feder und dgl. erzeugt wird.

In den oben beschriebenen Fig. 3 bis 13 wird die Umfangskraft vom Antriebsrad 16 auf das Zugmittel 13, insbesondere den Flachriemen, Gurt und dgl., über Reibschluss übertragen. Im Sinne der Erfindung ist nach den Ausführungen in den Fig. 3 bis 13 auch möglich, als endloses Zugmittel 13 einen Zahnriemen oder eine Kette zu verwenden, bei dem(r) die Umfangskraft vom Antriebsrad 16 auf das Zugmittel 13 über Formschluss übertragen wird. Mit den beschriebenen Spanneinrichtungen 18 ist es nun auch bei diesen Zugmitteltrieben 11 möglich, die Spannung im Zugmittel 13 in oben beschriebener Weise zu halten und Schwingungen im Zugmittel 13 zu vermeiden.

Abschließend sei noch darauf hingewiesen, dass die Spannelemente 19a, b auch durch einen am Tragkörpern 27a, b angeordneten Führungsteil gebildet sein können und eine etwa bogenförmige, insbesondere halbkreisbogenförmige, Umlenkung für das entlang dieser geführte Zugmittel 13 aufweisen. Ebenso kann auch zumindest eines der Umlenkräder 15a, b oder das weitere Umlenkrad 16 durch einen Umlenkteil mit bogenförmiger Führungsauflage für das an dieser geführte Zugmittel 13 gebildet sein. Des weiteren ist es möglich, dass neben dem Antriebsrad 17 wenigstens eines der Spannelemente 19a, b, insbesondere Spannräder, und/oder das weitere Umlenkrad 16 mit dem Antrieb 23 gekuppelt und motorisch angetrieben sind. Andererseits kann wenigstens eines der beiden Umlenkräder 15a, b angetrieben sein, während das Antriebsrad 17 durch ein weiteres Umlenkrad ersetzt wird und in einer Ebene parallel zum weiteren Umlenkrad 16 angeordnet ist. Die Spannräder, Umlenkräder 15a, b sowie das weitere Umlenkrad 16 und Antriebsrad 17 sind zueinander achsparallel angeordnet.

In den Fig. 5 bis 13 ist eine weitere und gegebenenfalls für sich eigenständige Ausführungsform des Zugmitteltriebes 1 gezeigt, wobei wiederum für gleiche Teile gleiche Bezugszeichen wie in den vorangegangenen Fig. verwendet werden.

Der Ordnung halber sei abschließend darauf hingewiesen, dass zum besseren Verständnis des Aufbaus vom Zugmitteltrieb 11 dieser bzw. dessen Bestandteile teilweise unmaßstäblich und/oder vergrößert und/oder verkleinert dargestellt wurden.

Vor allem können die einzelnen in den Fig. 1, 2, 3, 4; 5; 6, 7; 8, 9, 10; 11; 12, 13 und 14 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeibenaufstellung

- 1: Fördereinrichtung
- 2: Traggestell
- 3: Förderrichtung
- 4: Stückgut
- 5: Seitenteil

- 6: Querträger
- 7: Seitenführungsschiene
- 8: Stützfuß
- 9: Aufstandsfläche
- 10: Rahmen

- 11: Zugmitteltrieb
- 12: Transportebene
- 13: Zugmittel
- 14: Antriebsstation
- 15a: Umlenkrad
- 15b: Umlenkrad

- 16: Umlenkrad
- 17: Antriebsrad
- 18: Spanneinrichtung
- 19a: Spannelement
- 19b: Spannelement
- 20: Tragschenkel

- 21: Tragarm
- 22: Verbindungssteg
- 23: Antrieb
- 24: Umlaufrichtung
- 25: Kulissenbahn

- 26a: Anschlagelement
- 26b: Anschlagelement
- 27a: Tragkörper
- 27b: Tragkörper
- 28: gezogenes Trum
- 29: rücklaufendes Trum
- 30a: Führungsschlitten
- 30b: Führungsschlitten

- 31: Stellelement
- 32: Abstand
- 33: Spannrichtung
- 34: Verstellweg

- 35a: Anschlagfläche
- 35b: Anschlagfläche

- 36: Einlaufseite
- 37: Auslaufseite
- 40: Achsabstand
- 41: Achsabstand
- 42: Spannlager
- 43a: Montageblech
- 43b: Montageblech
- 44: Lasche
- 45: Lasche

- 46a: Dämpfungselement
- 46b: Dämpfungselement
- 47: Montagehilfsmittel
- 48: Verstellabstand
- 50: Nachstellvorrichtung

- 51: Arretiervorrichtung
- 52: Koppelungselement
- 53: Führungselement
- 54: Führungselement
- 55: Schubstange
- 56: Verbindungselement
- 59: Klemmkörper
- 60: Aufnahmekörper

- 61: Federelement
- 62: Ausnehmung
- 63: Lagerbohrung
- 64: Nachstellrichtung
- 65: Eingriffsfläche

- 66: Flansch
- 67: Rahmenteil
- 68: Führungslänge
- 69: Höhen- und Seitenführungsbahn
- 70: Klemmkeil

- 71: Federelement
- 72: Führungsbolzen
- 73: Eingriffsfläche
- 74: Eingriffsfläche
- 75: Maß

- 76a: Achse
- 76b: Achse
- 77a: Schwenkhebel
- 77b: Schwenkhebel

- 82a: Verstellgeschwindigkeitsbegrenzer
- 82b: Verstellgeschwindigkeitsbegrenzer
- 83a: Kolbenstange
- 83b: Kolbenstange
- 84a: Führungsvorrichtung
- 84b: Führungsvorrichtung
- 85a: Seilzug
- 85b: Seilzug

- 86a: Achse
- 86b: Achse
- 87a: Umlenkrolle
- 87b: Umlenkrolle
- 88a: Befestigungselement
- 88b: Befestigungselement
- 89a: Gewicht
- 89b: Gewicht

## Patentansprüche

1. Zugmitteltrieb (11), insbesondere für eine Fördereinrichtung (1), mit einem Rahmen (10), jeweils wenigstens einem an diesem gelagerten Umlenkrad (15a, b) und Antriebsrad (17), einem in Bezug auf eine Umlaufrichtung (24) reversierbaren und um das Umlenk- und Antriebsrad (15a, b, 17) geführten, endlos umlaufenden, flexiblen Zugmittel (13) mit einem gezogenen Trum (28) und einem rücklaufenden Trum (29), einer Spanneinrichtung (18) sowie wenigstens einem Stellelement (31), welche Spanneinrichtung (18) in Umlaufrichtung (24) des Zugmittels (13) zwei hintereinander angeordnete und relativ zueinander verstellbare Tragkörper (27a, b) und an diesen jeweils gelagerte Spannelemente (19a, b) aufweist, wobei die Spannelemente (19a, b) mit aufeinander zugerichteten Spannkräften beaufschlagbar sind und das Zugmittel (13) mit seinem gezogenen Trum (28) um eines der Spannelemente (19a, b) und mit seinem rücklaufenden Trum (29) um das andere der Spannelemente (19a, b) sowie um das Umlenk- und Antriebsrad (15a, b, 17) und/oder zumindest ein weiteres, am Rahmen (10) gelagertes Umlenkrad (16) geführt ist, **dadurch gekennzeichnet, dass** die Tragkörper (27a, b) über das Stellelement (31) bewegungsmäßig miteinander gekoppelt sind.

2. Zugmitteltrieb nach Anspruch 1, **dadurch gekennzeichnet, dass** die Tragkörper (27a, b) auf ihren voneinander abgewandten Seiten jeweils eine Anschlagfläche (35a, b) ausbilden und der Tragkörper (27a, b) mit dem im Bereich des gezogenen Trums (28) anliegenden Spannelement (19a, b) mit seiner Anschlagfläche (35a, b) gegen ein Anschlagelement (26a, b) abgestützt und positioniert gehalten ist.

3. Zugmitteltrieb nach Anspruch 1, **dadurch gekennzeichnet, dass** die Spannelemente (19a, b) in einem Abstand (32) voneinander angeordnet sind, wobei der Abstand (32) über das wenigstens eine Stellelement (31) begrenzt verstellbar ausgebildet ist.

4. Zugmitteltrieb nach Anspruch 1, **dadurch gekennzeichnet, dass** die Tragkörper (27a, b) als Führungsschlitten (30a, b) und voneinander getrennt ausgebildet ausgebildet sind und dass die Spannelemente (19a, b) über die Tragkörper (27a, b) entlang einer sich über eine Teillänge des Zugmitteltriebes (11) erstreckende Kulissenbahn (25) am Rahmen (10) verstellbar geführt sind.

5. Zugmitteltrieb nach Anspruch 1, **dadurch gekennzeichnet, dass** die Tragkörper (27a, b) durch am Rahmen (10) um senkrecht zur Längserstreckung des Zugmitteltriebes (11) verlaufende Achsen (76a, b) schwenkbar gelagerte Schwenkhebel (77a, b) gebildet sind.

6. Zugmitteltrieb nach Anspruch 1, **dadurch gekennzeichnet, dass** die Spannelemente (19a, b) jeweils durch wenigstens ein an den Tragkörpern (27a, b) drehbar gelagertes Spannrad gebildet sind.

7. Zugmitteltrieb nach Anspruch 1, **dadurch gekennzeichnet, dass** die Spannelemente (19a, b) jeweils durch wenigstens einen an den Tragkörpern (27a, b) angeordneten Führungsteil gebildet sind und eine etwa bogenförmige, insbesondere halbkreisbogenförmige, Umlenkung für das an dieser geführte Zugmittel (13) aufweisen.

8. Zugmitteltrieb nach Anspruch 7, **dadurch gekennzeichnet, dass** jeder Führungsteil mit der Umlenkung durch den Tragkörper (27a, b) gebildet ist.

9. Zugmitteltrieb nach Anspruch 2, **dadurch gekennzeichnet, dass** ein Verstellweg (34) der Tragkörper (27a, b) von zwei in deren Verstellrichtung distanziert voneinander angeordneten Anschlagelementen (26a, b) begrenzt ist, wobei die Anschlagelemente (26a, b) am Rahmen (10) ortsfest angeordnet und die Tragkörper (27a, b) zwischen den Anschlagelementen (26a, b) verstellbar am Rahmen (10) gelagert sind.

10. Zugmitteltrieb nach Anspruch 2, **dadurch gekennzeichnet, dass** ein Verstellweg (34) der Tragkörper (27a, b) von zwei in deren Verstellrichtung distanziert voneinander angeordneten Anschlagelementen (26a, b) begrenzt ist und zumindest eines der Anschlagelemente (26a, b) über eine zwischen dem Tragkörper (27a, b) und dem Rahmen (10) angeordnete Nachstellvorrichtung (50) in Richtung zum betreffenden Tragkörper (27a, b) verstellbar ausgebildet ist, wobei die Tragkörper (27a, b) zwischen den Anschlagelementen (26a, b) verstellbar am Rahmen (10) gelagert sind.

11. Zugmitteltrieb nach Anspruch 10, **dadurch gekennzeichnet, dass** die Nachstellvorrichtung (50) eine Arretiervorrichtung (51) mit zumindest einem Arretierelement aufweist, wobei das zumindest eine Arretierelement eine gegen die Nachstellrichtung (64) des Anschlagelementes (26a, b) gerichtete Verstellbewegung des Anschlagelementes (26a, b) blockiert.

12. Zugmitteltrieb nach Anspruch 10 oder 11, **dadurch gekennzeichnet, dass** die Nachstellvorrichtung (50) ein zwischen der Arretiervorrichtung (51) und dem betreffenden Tragkörper (27a, b) angeordnetes Koppelungselement (52) umfasst und dass das Koppelungselement (52) und der betreffende Tragkörper (27a, b) miteinander in Eingriff stehende Führungselemente (53, 54) aufweisen.

13. Zugmitteltrieb nach Anspruch 12, **dadurch gekennzeichnet, dass** das Führungselement (53) vom Koppelungselement (52) durch einen Längsschlitz und das Führungselement (54) vom Tragkörper (27a, b) durch einen in den Längsschlitz vorragenden Führungsansatz gebildet sind.

14. Zugmitteltrieb nach Anspruch 12 oder 13, **dadurch gekennzeichnet, dass** das Koppelungselement (52) mit seinem vom Tragkörper (27a, b) abgewandten Ende mit einer die Arretiervorrichtung (51) aufweisenden und gegenüber dem Rahmen (10) ausschließlich in Spannrichtung (33) des zur Nachstellrichtung (50) benachbarten Spannelementes (19a, b) verstellbare Schubstange (55) verbunden ist.

15. Zugmitteltrieb nach einem der Ansprüche 11 bis 14, **dadurch gekennzeichnet, dass** die Arretiervorrichtung (51) neben der Schubstange (55) und dem auf dieser gelagerten zumindest einen Arretierelement, insbesondere Klemmkörper (59), einen zur Schubstange (55) koaxialen, rotationssymmetrischen Aufnahmekörper (60) mit einer von der Schubstange (55) durchsetzten Lagerbohrung (63) und einer zur Schubstange (55) koaxialen Ausnehmung (62) mit einer in zur Nachstellrichtung (64) des Anschlagelementes (26a, b) entgegengesetzter Richtung konisch verjüngender Eingriffsfläche (65) sowie wenigstens ein Federelement (61) aufweist, wobei das zumindest eine Arretierelement über das Federelement (61) gegen die konische Eingriffsfläche (65) vorgespannt und zwischen dem Rahmen (10) und Aufnahmekörper (60) angeordnet ist und der Aufnahmekörper (60) am Rahmen (10) befestigt ist.

16. Zugmitteltrieb nach Anspruch 15, **dadurch gekennzeichnet, dass** der Klemmkörper (59) durch einen zur Schubstange (55) koaxialen Klemmring mit zur Eingriffsfläche (65) des Aufnahmekörpers (60) komplementär ausgebildeter, konischer Eingriffsfläche oder in einem Käfig gehaltene Klemmrollen gebildet ist.

17. Zugmitteltrieb nach Anspruch 12 oder 13, **dadurch gekennzeichnet, dass** das Koppelungselement (52) das mit dem Tragkörper (27a, b) gleichsinnig verstellbare Anschlagelement (26a, b) umfasst.

18. Zugmitteltrieb nach einem der Ansprüche 10 bis 17, **dadurch gekennzeichnet, dass** das Anschlagelement (26a, b) durch ein zum Tragkörper (27a, b) entferntes Ende des Längsschlitzes im Koppelungselement (52) gebildet ist.

19. Zugmitteltrieb nach einem der Ansprüche 11 bis 13, 17, 18, **dadurch gekennzeichnet, dass** die Arretiervorrichtung (51) zumindest zwei in Nachstellrichtung (64) des Anschlagelementes (26a, b) im Abstand voneinander angeordnete Arretierelemente, insbesondere Klemmkeile (70), und wenigstens ein zwischen den Arretierelementen vorgespanntes Federelement (71) aufweist, wobei der Rahmen (10) und der betreffende Tragkörper (17a, b) mit einander zugewandten und geneigt aufeinander zulaufenden Eingriffsflächen (73) sowie die Arretierelemente mit zu diesen komplementär ausgebildeten Eingriffsflächen (74) versehen und die Arretierelemente über das Federelement (71) in einander entgegengesetzten Richtungen gegen den Rahmen (10) und betreffenden Tragkörper (27a, b) vorgespannt sind.

20. Zugmitteltrieb nach Anspruch 1, **dadurch gekennzeichnet, dass** das Stellelement (31) durch ein längenveränderbares Federelement, insbesondere Zugfeder, Druckfeder, Gasfeder, oder zumindest einen gewichtsbelasteten Seilzug (85a, b) gebildet ist.

21. Zugmitteltrieb nach Anspruch 2, 9 oder 10, **dadurch gekennzeichnet, dass** die Anschlagelemente (26a, b) mit je einem Dämpfungselement (46a, b), wie Gummipuffer oder Fluiddämpfer, versehen sind.

22. Zugmitteltrieb nach Anspruch 1 oder 2, **dadurch gekennzeichnet, dass** die Tragkörper (27a, b) an ihren voneinander abgewandten Seiten mit je einem Dämpfungselement, wie Gummipuffer oder Fluiddämpfer, versehen sind, die eine Anschlagfläche (35a, b) ausbilden.

23. Zugmitteltrieb nach Anspruch 1, **dadurch gekennzeichnet, dass** zwischen dem Rahmen (10) und dem jeweiligen Tragkörper (27a, b) zumindest ein Verstellgeschwindigkeitsbegrenzer (84a, b), insbesondere eine Fluid-Zylinder-Kolbenanordnung, angeordnet ist.

24. Zugmitteltrieb nach Anspruch 1, **dadurch gekennzeichnet, dass** das Stellelement (31) gleichzeitig ein Dämpfungselement ausbildet.

25. Zugmitteltrieb nach Anspruch 1, **dadurch gekennzeichnet, dass** das Zugmittel (13) ausgehend vom Antriebsrad (17) über gegebenenfalls das weitere Umlenkrad (17) und eines der Spannelemente (19a, b) und über zwei zu einer Transportebene (12) vom Zugmittel (13) benachbart angeordnete Umlenkräder (15a, b) und danach über das andere der Spannelemente (19a, b) zurück zum Antriebsrad (17) geführt ist, wobei eines der Spannelemente (19a, b) am gezogenen Trum (28) und das andere der Spannelemente (19a, b) am rücklaufenden Trum (29) anliegt.

26. Zugmitteltrieb nach Anspruch 1 oder 25, **dadurch gekennzeichnet, dass** die beiden Tragkörper (27a, b) bzw. Spannelemente (19a, b) der Spanneinrichtung (18) in einer unterhalb des gezogenen Trums (28) und im Wesentlichen parallel zur Transportebene (12) vom Zugmittel (13) verlaufenden Ebene nebeneinander sowie zwischen den beiden Umlenkrädern (15a, b) für das um diese geführte, gezogene Trum (28) angeordnet sind.

27. Zugmitteltrieb nach Anspruch 1, 25 oder 26, **dadurch gekennzeichnet, dass** das Antriebsrad (17) und erste Spannelement (19a) sowie das weitere Umlenkrad (16) und zweite Spannelement (19b) jeweils paarweise übereinander angeordnet sind und/oder ein Umschlingungswinkel der Umlenk- und Antriebsräder (16, 17) sowie der Spannelemente (19a, b) durch das Zugmittel (13) jeweils etwa 180° beträgt.

28. Zugmitteltrieb nach einem der Ansprüche 1 bis 26, **dadurch gekennzeichnet, dass** ein Radius der Spannelemente (19a, b) und des weiteren Umlenkrades (16) als auch des Antriebsrades (17) gleich ausgebildet ist und/oder ein zur Transportebene (12) vom Zugmittel (13) paralleler Achsabstand (40) zwischen den Spannelementen (19a, b), insbesondere den Spannrädem, kleiner bemessen ist als ein zur Transportebene (12) vom Zugmittel (13) paralleler Achsabstand (41) zwischen dem weiteren Umlenkrad (16) und Antriebsrad (17).

29. Zugmitteltrieb nach Anspruch 1, **dadurch gekennzeichnet, dass** das weitere Umlenkrad (16) auf einem gegenüber dem Spannelement (19a, b) in zur Spannrichtung (33) desselben paralleler Richtung verstellbaren Spannlager (42) am Rahmen (10) gelagert ist.

30. Zugmitteltrieb nach Anspruch 1 oder 6, **dadurch gekennzeichnet, dass** zusätzlich zum Antriebsrad (17) wenigstens eines der Spannräder und/oder das weitere Umlenkrad (16) angetrieben ist.

31. Zugmitteltrieb nach Anspruch 1, **dadurch gekennzeichnet, dass** das Zugmittel (13) durch eine Kette, Seil, Riemen, Gurt oder Band gebildet ist.

32. Fördereinrichtung (1) zum Befördern von Stückgütern (4) entlang eines Transportweges über ein Zugmittel (13) wenigstens eines Zugmitteltriebes (11), **dadurch gekennzeichnet, dass** der Zugmitteltrieb (11) nach einem der Ansprüche 1 bis 31 ausgebildet ist.
